# EUROPEAN PATENT SPECIFICATION

(11) **EP 4 120 653 B1**
(45) Date of publication and mention of the grant of the patent: **19.02.2025**
(21) Application number: 22185033.2
(22) Date of filing: 14.07.2022
(51) Int. Cl.: H04L 41/14, H04L 41/147, H04L 41/0631, H04L 43/08, H04L 41/142, H04L 41/16, H04L 41/069, H04L 43/022, H04L 43/20, H04L 41/122, H04L 43/045

(54) **COMMUNICATION NETWORK PERFORMANCE AND FAULT ANALYSIS USING LEARNING MODELS WITH MODEL INTERPRETATION**
LEISTUNGS- UND FEHLERANALYSE VON KOMMUNIKATIONSNETZEN UNTER VERWENDUNG VON LERNMODELLEN MIT MODELLINTERPRETATION
ANALYSE DE PERFORMANCE ET DE DÉFAUT D'UN RÉSEAU DE COMMUNICATION À L'AIDE DE MODÈLES D'APPRENTISSAGE AVEC INTERPRÉTATION DE MODÈLE

(30) Priority: 15.07.2021 US 202163222040 P
(43) Date of publication of application: 18.01.2023
(73) Proprietor: EXFO Inc., Québec, QC G1M 2K2 (CA)
(72) Inventor: WHATLEY, Justin M., G1M 2K2 Québec (CA)
(74) Representative: Varley, James Richard

(56) References cited:
- US-A1- 2021 117 863
- US-A1- 2021 136 098
- US-A1- 2021 184 958
- RODRIGUEZ-PÉREZ RAQUEL ET AL: "Interpretation of machine learning models using shapley values: application to compound potency and multi-target activity predictions", JOURNAL OF COMPUTER-AIDED MOLECULAR DESIGN, SPRINGER NETHERLANDS, NL, vol. 34, no. 10, 2 May 2020 (2020-05-02), pages 1013 - 1026, XP037228335, ISSN: 0920-654X, [retrieved on 20200502], DOI: 10.1007/S10822-020-00314-0
- ROHIT SALUJA ET AL: "Towards a Rigorous Evaluation of Explainability for Multivariate Time Series", ARXIV.ORG, CORNELL UNIVERSITY LIBRARY, 201 OLIN LIBRARY CORNELL UNIVERSITY ITHACA, NY 14853, 6 April 2021 (2021-04-06), XP081936276

## Description

### BACKGROUND

Telecommunications networks complexity is increasing with the presence of multiple different Radio Access Technologies (such as 3G, 4G and 5G) and with major network transformations toward virtualized, software-defined and cloud-based infrastructure. As such, telecommunications networks are becoming more dynamic and self-organized and they now also need to meet stricter service level agreements for applications such as enhanced mobile broadband, essential services and massive Internet of Things. Delivering highly reliable services in such a context requires monitoring systems with advanced troubleshooting capacity to efficiently resolve any service performance degradation or outage.

The network monitoring data can take various forms depending on the networks being supervised. To list some examples: Call Traces for the Radio Access Network (RAN), Call Data Records or Session Data Records for the Mobile Core Network, metrics and key performance indicators (KPI) for the core network, log file and metrics for data center network. In all cases, the quantity of information is typically very high and isolating the cause of any performance degradation or outage is difficult. More and more, manual investigation is prohibitively difficult. Thus, automatic analysis is required to increase the efficiency of the analysis and reduce resolution time.

US 2021/117863 A1 discloses methods and systems that provide machine learning interpretability. SHAP values of historical and predicted data, along with features of both, are used to provide a measure of the impact of training data points on a predictions. Removal of an individual training data point from a training data set, followed by comparing the resulting prediction with that obtained by the full training data set, also provides a measure of influence of individual training data points on forecasts.

### SUMMARY

The invention is defined in the appended claims.

Telecommunications network analysis systems that aim to uncover problems in the network are commonly called root cause analysis (RCA) systems and have been used for decades. These RCA systems often have a wide range of implementation strategies, ranging from expert systems to statistical approaches. Although some of the techniques employed in RCA could be used across domains and applications, identifying the source of a fault often requires more specific knowledge of the context.

Uncovering possible causes for faults in modern telecommunication networks remains an area of open research due to the complexity and evolving nature of this type of network. First, a diagnosis system should work for various types of data logs (e.g., voice calls, data, multimedia sessions, system telemetry, and other operational aspects) as communication networks carry large amounts of data traffic along with traditional voice signals for a call, which might include network operations and entities outside of immediate context for the call or session. Second, a diagnosis solution should work with the increasing number of features. Logs can include features related to the service (e.g., the content provider, the quality and priority classes), the network (e.g. the Radio Access Technology and the involved gateways), and/or the user (e.g. the handset type and the handset manufacturer). Further, these features can depend on each other due to the architecture of network and services. Third, a diagnosis solution should address the complex interplay between features - for example, an OS version not supporting a particular service. Both the service and the OS can behave normally in a majority of sessions when scrutinized independently; however, the issue might only be diagnosed in logs containing both. Finally, the diagnosis solution should focus on problems that have an actual impact on the network performance. A problem that happens sporadically in a device used by millions of users can have a greater importance than a problem that occurs regularly in a device used by only hundreds of users. The balance between number of occurrences and inefficiency is a matter of prioritizing mitigation actions.

Amongst conventional RCA solutions applied in telecommunications networks, two common approaches can typically be distinguished. One approach involves analysis or diagnosis is implemented by scrutinizing one feature in particular. The other main approach, which may cover a range of techniques, involves analysis of network topological structure.

Single feature analysis is the most popular approach, as this can most easily be applied and interpreted by telecom network experts when attempting to isolate a possible cause for a network inefficiency. As used herein, the term "network inefficiency" or "inefficiency" applied to a feature, network entity, or the like, refers to one or another form of degradation, failure, of network operation or performance. Although single feature analysis is the simplest approach for exploration, excluding scenarios where more than one feature may be contributing to the problem can miss important insights. The main drawback of this approach is that it does not properly account for possible additive effects or incompatibilities between multiple features for degradation in network performance. Network performance can only be fully explained by combining different network elements, as the impact of a single network element might be insufficient to produce noticeable degradation. As such, failure to explore network interactions reduces the likelihood of isolating the root cause of a problem.

Thus, diagnosis based on an isolated feature approach, while understandable and manageable by telecommunication experts, has limits in that it typically does not account for feature dependencies and interactions. For example, the cells connected to a low performing Base Station Controller (BSC) may appear as inefficient. Approaches evaluating one feature at a time may be limited in that they ignore all the problems produced by multiple features, such as incompatibility between components.

Traditional RCA for telecommunication networks using network topological structure offers the advantage of leveraging network domain knowledge for quick assessment of topologically connected elements. However, a fixed topology may limit the discovery of interactions between distant, seemingly unrelated nodes. Topology based strategies also require knowledge of the telecommunication network topology which, as telecom networks become more complex, becomes increasingly problematic. Thus, a solution that does not depend on topology might better leverage connections between distant problematic network elements and generalize to increasingly complex telecommunication networks.

To summarize, the growing complexity of telecommunication networks has made traditional applications of RCA largely impractical. Investigations at the level of network elements can miss more complex arrangements, while predetermined/defined topologies will generally not account for other possible interactions in the network; these account for the traditional statistical and rule-based approaches, respectively, which are becoming too simplistic relative to the complexity of the data. Thus, there is a need for new approaches and techniques that can accurately and reliably account for the effects on network performance of interactions between the many operational elements as they contribute to network performance, while at the same time providing an analysis which relates particular operational elements to network degradation in a non-linear manner. Further, these new systems are needed to improve the automated discovery of topological relations, discovering and controlling for the context of the interactions between the operational elements.

Accordingly, the inventor has recognized (1) that modern machine learning (ML) techniques can be applied to modeling communication network operations in a manner that learns new, and incorporates known, interactions of the operational elements and features that are inputs to an ML model, and (2) that analytical model interpretation techniques can be applied to the ML models themselves to yield data that can effectively explain the ML model predictions in terms of individual model inputs. Modern techniques in machine learning and deep learning are designed to represent large amounts of data, and the inventor has recognized that machine learning can be utilized to devise novel techniques for and approaches to performance and fault analysis of communication systems. In particular, as described herein, machine learning can be used to construct performance and fault analysis system, referred to hereinafter as "ML-based PFA systems." Since machine learning does not necessarily enforce causal relationships, the description of ML-based PFA systems herein largely avoids the RCA terminology that is implicitly or explicitly associated with "cause." However, example embodiments of ML-based PFA systems nevertheless significantly expand on what traditional correlation-based RCA systems do.

Machine learning and deep learning strategies offer state-of-the-art performance for predictions. Given sufficient data, a machine learning model offers a finely-tuned mapping (i.e., function) between the data it was trained on and some target variable (e.g., latency). Yet the complexity of modern machine learning models can often make interpretability difficult (e.g., deep learning models), while simpler models are often easier to understand (e.g., linear models, tree-based models). Consequently, modelling using more interpretable models may offer particular advantages as part of a ML-based PFA system.

Example embodiments described herein attain the high-prediction performance of complex models while remaining interpretable, where prediction performance may be measured in one or more ways, including but not limited to metrics such as prediction accuracy, precision, and recall. This is accomplished by using extreme gradient boosting algorithms to form tree-based models, a strategy that commonly offers good prediction performance for structured data like that generated by telecommunications systems (e.g., call data records, session data records), while also remaining interpretable using a state-of-the-art interpretability strategy called SHapley Additive exPlanations. Advanced machine learning interpretability strategies such as SHAP have not generally (if at all) been used previously to explain telecommunication networks data. Moreover, the specific application for fault detection and analysis using the model to represent relationships, extract and highlight the relevant differences in relative feature contributions is novel.

The strategy involves first representing telecom data into a non-linear model, such as a decision tree structure formed using a gradient boosting algorithm, to represent relationships and interactions between a set of inputs (e.g., call detail record, or CDR, dimensions and metrics) to a target variable outcome (e.g., average throughput, call status) that might serve as a key performance indicator (KPI). In other words, in a CDR example the model is a non-linear function that maps CDR inputs to target field is formed, ensuring that complex interactions in the inputs are not ignored as they would be in conventional linear correlational and expert rule approaches. Once the representation is formed, the quality of which can be determined by the model prediction performance on samples of unseen data, the strategy involves probing the model to gauge the importance of different input features or elements (e.g., a continuous or discrete value, setting, or category identifier for a feature) on specific outcomes given a problematic context (e.g., a problematic region, a dropped call status, etc.). Taken together, we produce a non-linear model that captures relationships to a target variable outcome and use this model to understand problems given particular contexts of a telecom network data, a strategy that more effectively incorporates the complexity and context dependence of telecom network data than traditional approaches such a linear correlation and expert rules.

The specific approach to attribute individual feature contributions to the outcome (e.g., how much individual locations, dimensions and metrics were associated with a KPI such as average throughput or the final call status), a strategy called SHapley Additive Explanations (SHAP) is used (e.g., Scott M Lundberg and Su-In Lee, "A Unified Approach to Interpreting Model Predictions," in Advances in Neural Information Processing Systems 30, 2017, pp. 4768-4777). The SHAP technique computes Shapley values for the marginal expectation or conditional expectations for feature values in the context of a specific example by analyzing a machine learning model. This approach provides fair contributions of each feature-value pair to the model prediction. The conventional use of SHAP is for model interpretability, to understand and explain why a model is making specific predictions, but not as part of a ML-based PFA system. To our knowledge, such a system has not been used for performance and fault analysis in telecommunications networks.

Embodiments, aspects, and advantages, will become apparent to those of ordinary skill in the art by reading the following detailed description, with reference where appropriate to the accompanying drawings.

### BRIEF DESCRIPTION OF THE DRAWINGS

Figure 1 is a simplified block diagram showing components of a system for ML-based performance and fault analysis, in accordance with example embodiments.
Figure 2 illustrates a schematic drawing of a computing device, according to an example embodiment.
Figure 3 illustrates a schematic drawing of a networked server cluster, according to an example embodiment.
Figure 4 is an example operational block diagram of aspects of ML-based performance and fault analysis, in accordance with example embodiments.
Figure 5A is an example visualization of impact analysis from a ML-based performance and fault analysis system, in accordance with example embodiments.
Figure 5B is another example visualization of impact analysis from a ML-based performance and fault analysis system, in accordance with example embodiments.
Figure 6A is an example visualization of a baseline from a ML-based performance and fault analysis system, in accordance with example embodiments.
Figure 6B illustrates a visualization of a comparison of a baseline with a hypothetical problematic cell, in accordance with example embodiments.
Figures 7A-7D illustrate example fingerprinting, in accordance with example embodiments.
Figure 8 illustrates an example times series analysis system, in accordance with example embodiments.
Figures 9A-9B illustrates an example time series data and model-based input element analysis, in accordance with example embodiments.
Figure 10 is an examnple illustration of a stacked bar graph of relative importances, in accordance with example emboidments.
Figure 11 is an example visualization of impact analysis from a ML-based performance and fault analysis system that incorporates model error, in accordance with example embodiments.
Figure 12 is a flow chart of an example method, in accordance with example embodiments.

### DETAILED DESCRIPTION

Example methods, devices, and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features unless stated as such.

Additionally, any enumeration of elements, blocks, or steps in this specification or the claims is for purposes of clarity. Thus, such enumeration should not be interpreted to require or imply that these elements, blocks, or steps adhere to a particular arrangement or are carried out in a particular order.

### Example Analytical Formulation and Implementation

### A. Example Data, Notation, and Overview

Traditional automatic root cause analysis for service performance degradation and outages in telecommunications networks, together referred to as network inefficiencies, may be configured to exploit data collected by monitoring entities (e.g. physical, and virtual probes, logging systems, etc.) within telecommunication networks. Because the same types of data may be used in the performance and fault analysis techniques and example PFA systems described herein, a general review of the data collected by various monitoring entities of telecommunication systems is provided below.

The data provided by the monitoring entities form a dataset that may be used for performance and fault analysis and for root cause analysis. A dataset may be described as a collection of feature vectors, where a feature vector is a list of feature-value pairs. Each feature-value pair is also referred as an element of the feature vector. A feature refers to a measurable property, such as utilization, load, or may refer to a tag or label identifying an operational component, such as a device, service, program, or IP address of the network. A value may be either categorical (e.g., a device brand or model) or numerical (e.g., a measured and/or detected parameter value, which may be discrete or continuous, or Boolean value). In practice, there may be a plurality of features, and a respective plurality of possible values for each feature. In some illustrative discussions, features may be denoted as fⱼ, j=1,...,n, where n specifies the number of features, and a values will be denoted by vₖ, k=1,...,mⱼ, where mⱼ specifies the number of values for feature fⱼ. A feature-value pair may also be referred to as an element, eᵢ, where eᵢ=(fᵢ,vₖ), k=1,...,mⱼ, for each j=i.

Table 1 shows a simplified example of a dataset, where the features describe the attributes of the parties involved in mobile communications, such as a call or session. In this example, there are six features (n=6). The number of possible values for each feature is not necessarily indicated, but it may be seen that there are at least two values for each feature. Each row of the table includes a feature vector followed an associated performance metric, which, for purposes example, is a response time. There could be different and/or additional performance metrics logged for each record. Each row of the table may also correspond to a record of a database or dataset of performance data that may be obtained by one or more monitoring devices in or of a communication network. The vertical ellipses in the last row indicate that there may be more entries in the table (i.e., more records containing feature vectors). In particular, the statistical analyses described are generally applied to the performance metrics. As such, it may generally be assumed that there are sufficient numbers of records to help ensure the validity and/or accuracy of the statistical analyses. In practice, this may typically be the case, as the number of call records, session logs, performance logs, and the like usually stretch into the hundreds, thousands, or more over typical collection time spans. The four records shown in Table 1 thus serve to illustrate concepts of analysis relating to various data selection criteria, with the assumption that number of actual records involved may be much larger.

For convenience in the discussion herein, each row is labeled with a record number ("Rec No." in the table), although this label may not necessarily be included in an actual implementation of the table. It should be understood that the form and content of Table 1 is an example for illustrative purposes of the discussion herein, and should not be interpreted as limiting with respect to example embodiments herein.

**Table 1**

| | ***Features*** | | | | | | ***Metrics*** |
|---|---|---|---|---|---|---|---|
| **Rec No.** | **Content Provider (f₁)** | **Service Type (f₂)** | **Service (f₃)** | **Content Category (f₄)** | **Host IP Address (f₅)** | **Server IP Address (f₆)** | **Response Time (ms)** |
| 1 | other | unknown | undetected | other | 80.12.32.235 | 80.12.32.235 | 1.0 |
| 2 | teamspeak | VoIP | TeamSpeak | VoIP and Messaging | 31.214.227.112 | 31.214.227.112 | 10.0 |
| 3 | teamspeak | VoIP | TeamSpeak | VoIP and Messaging | 149.202.129.60 | 149.202.129.60 | 12.0 |
| 4 | bittorrent | P2P | BitTorrent | P2P | 41.251.70.198 | 41.251.70.198 | 2.0 |
| ⋮ | ⋮ | ⋮ | ⋮ | ⋮ | ⋮ | ⋮ | ⋮ |

The organization of records containing feature vectors and performance metrics into a table, such as Table 1, may serve to describe certain aspects of the analysis described below. Specifically, it may be seen that each feature corresponds to a column in the table, and that the features of each row correspond to feature vectors. The entries in the feature columns correspond to values, and the column heading - i.e., feature - plus a given value corresponds to an element. For example, the pair (Service Type, VoIP) is an element that is present in both the second and third rows or data records. In later descriptions, when the term "feature" is used, it will usually refer to an entire column. And reference to a set of data containing only a specific element will be used to mean a subset of records each containing only feature vectors having specific feature-value pair combination corresponding to that element. For example, a subset of the data containing only the element (Service Type, VoIP) would be a subset of only the second and third records. In the continuous case as with performance metrics, the element can be a particular value or range of values (e.g., a quantile) depending on the use-case and what represents the most meaningful grouping. In addition, subsets of data need not necessarily be separate from Table 1. Rather, they may be viewed as Table 1 with ancillary information specifying which rows and/or columns are under consideration.

One of the main goals of both automatic root cause analysis and performance and fault analysis is determining which feature-value pairs are most associated to network inefficiencies, where, as noted, "network inefficiency" is a term used herein to describe degradation (including possible failure) of one or more aspects of network performance below some threshold or statistically meaningful level. Traditional root cause analysis attempts to attribute feature-value pairs as causes of inefficiencies, while PFA may identify correlations and not make causal claims. A network inefficiency may also be described as a statistically meaningful negative contribution to one or more aspects of network performance. Thus, a feature-value pair is considered to be inefficient if it causes or is associated with a statistically meaningful negative contribution to one or more aspects of network performance.

In the context of ML-based PFA systems described herein, feature-value pairs are inputs to a ML model of network performance, while one or more predicted performance characteristics are outputs of the model. As described below, training such an ML model involves iteratively adjusting model parameters to achieve some prescribed level of agreement between predicted performance characteristics and observed performance characteristics, given feature-value pairs as inputs. In accordance with example embodiments, data records corresponding to actual communication network operation may include and/or be associated with sets to feature-value pairs (such as feature vectors described above) as well as observed performance characteristics collected (e.g., via monitoring) during operation, for example. Thus, data records may be considered as providing both input data, as well as "ground truth" data for training an exemplary ML model of network performance. By way of example, data records may be or include call detail records (CDRs) and/or session detail records (SDRs).

As also described below, while the ML model can be trained to accurately predict various performance characteristics given input feature-value pairs, a goal of example embodiments herein is to interpretatively analyze a trained model in order to quantitatively evaluate how specific features and interactions between features impact and/or influence the predicted performance characteristics that are the outputs of the model. More particularly, the ML model may be constructed to incorporate complex interactions among and between the model inputs as they relate to the outputs of the model. As such, training may yield a ML model that accurately predicts outputs, but that may also be too complex to enable practical (or event tractable) direct analysis that explains the connections between the inputs (including their interactions) and the outputs. Example embodiments further involve techniques for computing for a ML model a form of diagnostic or explanatory data that can be used to obtain the quantitative contributions of features and feature interactions to network performance.

In the discussion herein, a data record (such as a CDR or SDR) may be described as including one or more "operational features" and one or more "observed performance characteristics" of a communication network. Further, "operational features" may be described as being "associated with one or more feature-value pairs" specific to the data record. This terminology should be understood to mean that a data record may include a data label, variable, or parameter name that identifies an operational feature of the network. A feature-value pair associated with an operational feature in a particular data record thus assigns a specific value (or values) to that operational feature for the particular record. For example, a set of CDRs may all include "base station" as an operational feature, while each respective CDR of the set may have a specific value assigned to the "base station" of the respective CDR, the specific value identifying a specific actual base station of the network that handled a call associated with the respective CDR. The label "base station" and the assigned value in each respective CDR forms a feature-value pair of the respective CDR. Similarly, the term "performance characteristic" may be considered a label or name of an observable, detectable, and/or measurable characteristic of network performance, while the one or more observed performance characteristics included in (or associated with) each respective CDR records actual observations, detections, and/or measurements of performance characteristics of the network during the call associated with the respective CDR.

In accordance with example embodiments, the trained ML model may provide an accurate (and complex) mapping of input feature-value pairs to output predicted performance characteristics, while the analytical interpretation of the model may provide a quantitative evaluation of how specific feature-value pairs contribute to the output predicted performance characteristics. By ensuring that the ML model as trained is an accurate predictor of performance characteristics - i.e., that the predictions of the trained model match the observed performance characteristics to some specified confidence level, for example - the quantitative evaluation of the trained model may thus yield an effective performance and fault analysis for the network with respect to any one or more input feature-value pair combinations.

In the discussion herein, the term "value" is sometimes dropped from "feature-value" in combination. For example, a "feature" described as contributing to a predicted performance characteristic can refer to a class or group of the same type of operational entity, such as a base station. Or a "feature" described as contributing to a predicted performance characteristic can refer to a specific instance of a class or group of the same type of operational entity, such as a particular base station. It should be clear from context whether the discussion applies to the feature generally, e.g., as in the contribution of a group of base stations to throughput, for example, or to the contribution of a particular base station (i.e., feature-value pair) to dropped calls, for example. As described below, PFA generally proceeds on a per-feature-value pair basis, such that results for group or class of features may be derived by aggregating results from specific instances of a given feature type, for example.

Non-limiting examples of features of CDRs and/or of SDRs include: base station ID, cell ID, sector ID, radio frequency, public land mobile network (PLMN) ID, and radio access technology. Non-limiting features performance characteristics include: call completion rate, dropped call count, data throughput, call quality, and signal-to-noise.

In accordance with example embodiments, the ML model may be trained using a full representation of the data - i.e., data associated with both normal and problematic performance. In this way, the model may be trained using both normal and problematic inputs, resulting a baseline against which exclusively problematic inputs may be compared. This strategy allows for specific questions to be posed in connection with input data. Specifically, problematic samples may be selected for further investigation, using SHAP for analysis of a particular sample/problem set to compare against regular data used to produce the baseline, which there serves as form of control. As such, selecting a problematic sample and comparing this to a representative control/baseline without this problem offers a contrastive view highlighting individual features and elements that contributed most to the predicted problematic outcome, effectively highlighting characteristics in the sample that are most associated with the problem in the problematic sample context.

In short, given a particular set of input feature values, Shapley values assign a contribution to each of the input features to the model predicted output value as compared to the average output value across all examples used to form the model. This contribution quantifies how much each input feature contributed to the difference between the particular output value and the average, expected, output value. Non-linear models capture possible inter-dependencies between input features and the associated output value, and SHAP values provide a fair attribution to each feature that is independent of the order in which the input features are applied (should the model be sensitive to such orderings) and whether all features are present.

There are advantages to this strategy in drawing correct conclusions when performing analysis. For instance, given a particular feature that occurs in a high proportion of problematic cases, it may not necessarily be possible to conclude that this feature is itself problematic, since it may occur in an even higher proportion of normal cases. This can be a serious flaw with any strategy that only observes the subset of data associated with a problem and attempts to draw conclusions. Because the ML model has been trained on normal and problematic cases (and given a sufficiently large dataset and a constrained number of model parameters), the model will not be narrowly focused on the specific input elements found in the sample to draw its conclusions. Instead, it can draw from those input elements as they pertain to the telecommunications dataset used to form the model more generally. Put another way, the model has a general representation encoding the way input input elements interact and are mapped to the predicted target variable. This idea extends to the use of controls and baselines with SHAP, since a set of one or more features (e.g., cell frequency) can be held constant for both a problematic sample and an otherwise random sample, allowing for a fair comparison across features and input elements as they contribute to the target between the problematic sample and baseline.

Accordingly, then, example embodiments provide for fault characterization using a detection and analysis system that employs a model which can be non-linear to capture relationships in telecommunications data as they relate to measures of possible faults. The system works by forming a model to learn the relationships, and "unpacks" the model with SHAP to perform an analysis on problematic samples of interest. To assess what is problematic in a given sample, the relative contributions of features and elements may be compared to a control/baselines sample.

### B. Example System Architecture

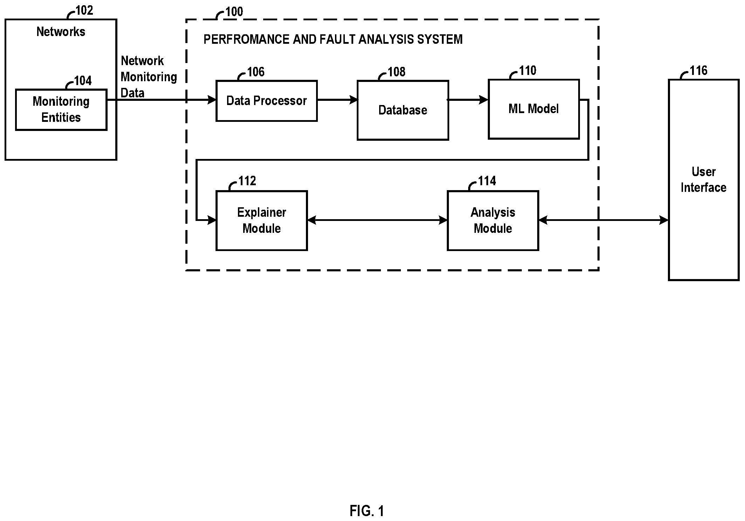

Figure 1 is a simplified block diagram showing components of a system 100 for ML-based automatic performance and fault analysis, in accordance with example embodiments. As show, system 100 includes a Data Processor 106, a Database 108, an ML model 110, an Explainer module 112, and an Analysis module 114. In operation together, these components may produce the ML-based PFA, which could be presented on a User Interface 116, for example. The Networks 102 is supervised by monitoring entities 104. The network monitoring data may be processed by the Data Processor 106 to produce a dataset of data records, such as CDRs and/or SDRs. The data records may then be stored in the Database 108. From the Database 108, the data records may be input to the ML model 110 for training and for subsequent analysis in concert with the Explainer module 112. Specifically, training may involve iteratively adjusting the ML model to predict performance characteristics given observed performance characteristics in the data records as ground truths. The contributions of inputs to the ML model - e.g., feature-value pairs of the data records - to the model outputs may be precalculated or calculated on demand using SHAP, for example, by the Explainer module 112. The Analysis module 114 may then obtain contributions data, for specific inputs from the Explainer module 112 generate various forms of PFA, such as severity and/or impact analysis of potentially problematic features, and comparative analysis of potentially problematic features against baseline performance. The User Interface 116 may display results, as well as provide a user to adjust and/or select specific types of analyses to conduct.

In Figure 1, the ML-based PFA system 100 may be or include a computing device or system. By way of example, a computing device may include a processing unit which includes at least functional components 106, 108, 110, 112, 114. Functional components 106, 108, 110, 112, 114 can be software instructions executed on the processing unit for automatic performance and fault analysis. The processing unit can be a digital device that, in terms of hardware architecture, generally includes a processor, input/output (I/O) interfaces including user interface 116, a network interface and memory. The processing unit can be one or multiple virtual instances running over a virtualization layer abstracting computing resource. It should be appreciated by those of ordinary skill in the art that Figure 1 depicts the processing unit in an oversimplified manner, and a practical embodiment may include additional components and suitably configured processing logic to support known or conventional operating features that are not described in detail herein. Also, the processing device can be a stand-alone server, group of servers, etc. for executing the automatic performance and fault analysis.

When the processing unit is a digital device, the components 106, 108, 110, 112, 114 may be communicatively coupled via a local interface. The local interface can be, for example, but not limited to, one or more buses or other wired or wireless connections, as is known in the art. The local interface can have additional elements, which are omitted for simplicity, such as controllers, buffers (caches), drivers, repeaters, and receivers, among many others, to enable communications. Further, the local interface may include address, control, and/or data connections to enable appropriate communications among the components.

The network interface may be used to enable the processing device to communicate on a network, such as the Internet. The network interface may include, for example, an Ethernet card or adapter (e.g., 10BaseT, Fast Ethernet, Gigabit Ethernet, 10GbE) or a wireless local area network (WLAN) card or adapter (e.g., 802.11a/b/g/n/ac). The network interface may include address, control, and/or data connections to enable appropriate communications on the network.

A processor is used as a hardware device for executing software instructions within processing device 100. The processor can be any custom made or commercially available processor, a central processing unit (CPU), an auxiliary processor among several processors associated with the processing device, a semiconductor-based microprocessor (in the form of a microchip or chip set), or generally any device for executing software instructions. When the processing device is in operation, the processor is configured to execute software stored within the memory, to communicate data to and from the memory, and to generally control operations of the processing device pursuant to the software instructions. In an exemplary embodiment, the processor may include a mobile-optimized processor such as optimized for power consumption and mobile applications.

The I/O interfaces, including user interface 116 can be used to receive user input from and/or for providing system output. User input can be provided via, for example, a keypad, a touch screen, a scroll ball, a scroll bar, buttons, and the like. System output can be provided via a display device such as a liquid crystal display (LCD), touch screen, and the like. System output may also be provided via a display device and a printer. The I/O interfaces can also include, for example, a serial port, a parallel port, a small computer system interface (SCSI), an infrared (IR) interface, a radio frequency (RF) interface, a universal serial bus (USB) interface, and the like. The I/O interfaces can include a graphical user interface (GUI) that enables a user to interact with the processing device 100.

The data store may be used to store data. The data store may include any of volatile memory elements (e.g., random access memory (RAM, such as DRAM, SRAM, SDRAM, and the like)), nonvolatile (non-transitory computer-readable media) memory elements (e.g., ROM, hard drive, tape, CDROM, and the like), and combinations thereof. Moreover, the data store may incorporate electronic, magnetic, optical, and/or other types of storage media.

The memory may include any of volatile memory elements (e.g., random access memory (RAM, such as DRAM, SRAM, SDRAM, etc.)), nonvolatile memory elements (e.g., ROM, hard drive, etc.), and combinations thereof. Moreover, the memory may incorporate electronic, magnetic, optical, and/or other types of storage media. Note that the memory may have a distributed architecture, where various components are situated remotely from one another but can be accessed by the processor.

The software in memory can include one or more software programs, each of which includes an ordered listing of executable instructions for implementing logical functions. In the example of Figure 1, the software in the memory includes a suitable operating system (O/S) and programs. The operating system may control the execution of other computer programs and provides scheduling, input-output control, file and data management, memory management, and communication control and related services. The programs may include various applications, add-ons, etc. configured to provide end-user functionality with the processing device. In accordance with example embodiments, system 100 may include a non-transitory computer-readable medium storing instructions thereon that, when executed by one or more processors of a system, cause the system to carry out operations described herein.

The processing device can be incorporated in a test equipment or be in communication with a test equipment. The test equipment can include different physical media test modules. The physical media test modules include ports and connectors to interface to networks for monitoring and troubleshooting. In an embodiment, a mobile device can execute an application which communicates with the test equipment. The mobile device can communicate with the test equipment via Bluetooth, Wi-Fi, wired Ethernet, USB, via combinations, or the like. The mobile device is configured to communicate to the Internet via cellular, Wi-Fi, etc.

Still referring to Figure 1, when the processing unit is running over a virtualization layer, the components 106, 108, 110, 112, 114 may run inside one or multiple virtual machine or container instances. When distributed over multiple instances, the components are exchanging information between themselves typically via a bridge network. The bridge network can be, for example, but not limited to, a virtual switch. Some of the components might also communicating on a network, such as the Internet. In this case, a virtual NIC is associated to each virtual machine while the containers are connected to the bridge network of the host system providing access to the network.

### C. Example Computing Devices and Cloud-Based Computing Environments

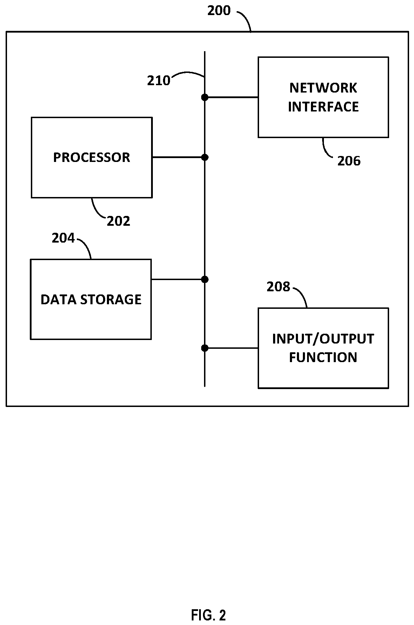

Figure 2 is a simplified block diagram exemplifying a computing device 200, illustrating some of the functional components that could be included in a computing device arranged to operate in accordance with the embodiments herein. Example computing device 200 could be a personal computer (PC), laptop, server, or some other type of computational platform. For purposes of simplicity, this specification may equate computing device 200 to a server from time to time, and may also refer to some or all of the components of computing device 200 as a "processing unit." Nonetheless, it should be understood that the description of computing device 200 could apply to any component used for the purposes described herein.

In this example, computing device 200 includes a processor 202, a data storage 204, a network interface 206, and an input/output function 208, all of which may be coupled by a system bus 210 or a similar mechanism. Processor 202 can include one or more CPUs, such as one or more general purpose processors and/or one or more dedicated processors (e.g., application specific integrated circuits (ASICs), graphical processing units (GPUs), digital signal processors (DSPs), network processors, etc.).

Data storage 204, in turn, may comprise volatile and/or non-volatile data storage and can be integrated in whole or in part with processor 202. Data storage 204 can hold program instructions, executable by processor 202, and data that may be manipulated by these instructions to carry out the various methods, processes, or functions described herein. Alternatively, these methods, processes, or functions can be defined by hardware, firmware, and/or any combination of hardware, firmware and software. By way of example, the data in data storage 204 may contain program instructions, perhaps stored on a non-transitory, computer-readable medium, executable by processor 202 to carry out any of the methods, processes, or functions disclosed in this specification or the accompanying drawings.

Network interface 206 may take the form of a wireline connection, such as an Ethernet, Token Ring, or T-carrier connection. Network interface 206 may also take the form of a wireless connection, such as IEEE 802.11 (Wifi), BLUETOOTH^{®}, or a wide-area wireless connection. However, other forms of physical layer connections and other types of standard or proprietary communication protocols may be used over network interface 206. Furthermore, network interface 206 may comprise multiple physical interfaces.

Input/output function 208 may facilitate user interaction with example computing device 200. Input/output function 208 may comprise multiple types of input devices, such as a keyboard, a mouse, a touch screen, and so on. Similarly, input/output function 208 may comprise multiple types of output devices, such as a screen, monitor, printer, or one or more light emitting diodes (LEDs). Additionally or alternatively, example computing device 200 may support remote access from another device, via network interface 206 or via another interface (not shown), such as a universal serial bus (USB) or high-definition multimedia interface (HDMI) port.

In some embodiments, one or more computing devices may be deployed in a networked architecture. The exact physical location, connectivity, and configuration of the computing devices may be unknown and/or unimportant to client devices. Accordingly, the computing devices may be referred to as "cloud-based" devices that may be housed at various remote locations.

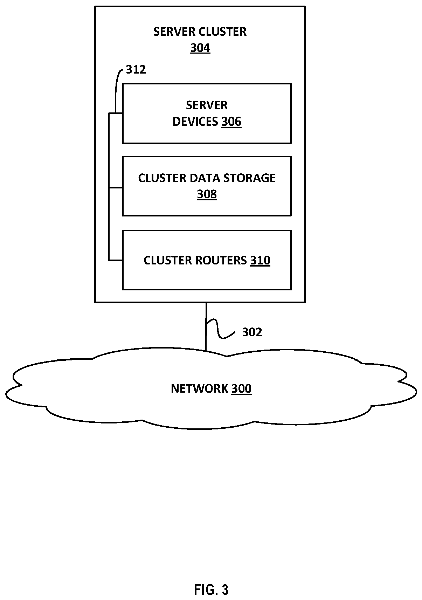

Figure 3 depicts a cloud-based server cluster 304 in accordance with an example embodiment. In Figure 3, functions of computing device 200 may be distributed between server devices 306, cluster data storage 308, and cluster routers 310, all of which may be connected by local cluster network 312. The number of server devices, cluster data storages, and cluster routers in server cluster 304 may depend on the computing task(s) and/or applications assigned to server cluster 304.

For example, server devices 306 can be configured to perform various computing tasks of computing device 200. Thus, computing tasks can be distributed among one or more of server devices 306. To the extent that these computing tasks can be performed in parallel, such a distribution of tasks may reduce the total time to complete these tasks and return a result.

Cluster data storage 308 may be data storage arrays that include disk array controllers configured to manage read and write access to groups of hard disk drives and/or solid state drives. The disk array controllers, alone or in conjunction with server devices 306, may also be configured to manage backup or redundant copies of the data stored in cluster data storage 308 to protect against disk drive failures or other types of failures that prevent one or more of server devices 306 from accessing units of cluster data storage 308.

Cluster routers 310 may include networking equipment configured to provide internal and external communications for the server clusters. For example, cluster routers 310 may include one or more packet-switching and/or routing devices configured to provide (i) network communications between server devices 306 and cluster data storage 308 via cluster network 312, and/or (ii) network communications between the server cluster 304 and other devices via communication link 302 to network 300.

Additionally, the configuration of cluster routers 310 can be based at least in part on the data communication requirements of server devices 306 and cluster data storage 308, the latency and throughput of the local cluster network 312, the latency, throughput, and cost of communication link 302, and/or other factors that may contribute to the cost, speed, fault-tolerance, resiliency, efficiency and/or other design goals of the system architecture.

As noted, server devices 306 may be configured to transmit data to and receive data from cluster data storage 308. This transmission and retrieval may take the form of SQL queries or other types of database queries, and the output of such queries, respectively. Additional text, images, video, and/or audio may be included as well. Furthermore, server devices 306 may organize the received data into web page or web application representations. Such a representation may take the form of a markup language, such as the hypertext markup language (HTML), the extensible markup language (XML), or some other standardized or proprietary format. Moreover, server devices 306 may have the capability of executing various types of computerized scripting languages, such as but not limited to Perl, Python, PHP Hypertext Preprocessor (PHP), Active Server Pages (ASP), JAVASCRIPT^{®}, and so on. Computer program code written in these languages may facilitate the providing of web pages to client devices, as well as client device interaction with the web pages. Alternatively or additionally, JAVA^{®} or other languages may be used to facilitate generation of web pages and/or to provide web application functionality.

### C. Example Model Construction and Analysis Procedures

In accordance with example embodiments, ML-based PFA can be used to address specific questions about network performance. Non-limiting examples of possible use cases for telecommunications data could include:
Given a geographical region with low throughput, CDRs within the selected region can be analyzed.

Given a cell on which connected CDRs have a low average download throughput relative to other cells in a larger area, CDRs for that cell during a problematic time can be analyzed.

Given dropped or blocked connections, CDRs with the aforementioned failure status can be analyzed.

Given service assurance KPIs in a telecommunications monitoring and troubleshooting system, event counters and network telemetry data can be analyzed.

Using the example of an embodiment of a ML-based PFA system described herein can offer specific advantages over conventional techniques. Some specific advantages include at least:
Domain knowledge is not required. Relative feature importance is learned from the data itself by evaluating data input features and target outcomes. This allows flexibility in the face of new and changing data (e.g., 5G network data) and complex interactions, reduces possible bias from domain experts and facilates analysis when there is a lack of domain specific knowledge.

Large quantities of data can be integrated from different sources. While conventional systems define a set of input criteria and operate over these based on pre-defined business rules, the ML-based system described herein can mix and match different data sources and learn relative importance with respect to target criteria (e.g., download average throughput).

An arbitrary number of feature interactions can be evaluated. Conventional rule-based and statistical approaches are limited to evaluating a fixed number of interactions, the evaluation of which must be predefined. For instance, a rule that one metric is down while another is up could be interpreted to mean something specific in a rule-based system. The interaction order of this fault analysis system, however, is mth order, limited only by the number of features available to the model and other hyperparameters chosen for model training. As such, the model will capture more complex interactions in the data, which can be visualized and interpreted in fewer dimensions (e.g., 2 or 3) for ease of analysis. SHAP provides a fair contribution to the features being evaluated and their interactions and, thus, takes full advantage of the context (e.g., a region of interest) for a particular result.

Example embodiments of the ML-based approach offers a fined-grained analysis over non-aggregated data. Most strategies for analysis evaluate distributions of individual features independently or summaries of such features (e.g., event counters over a time period). While such data sources could also be included as inputs to the fault analysis strategy, aggregation is not a requirement. Essentially, instead of an aggregation like a count or a mean over some fixed time interval to put events in relation to one another, the learning algorithm will keep the most relevant input elements by forming its own summary. Extreme gradient boosting can do this efficiently while operating over 100M+ rows of data, which makes it feasible for applications fault analysis in telecom, paticularly while supported by sampling strategies.

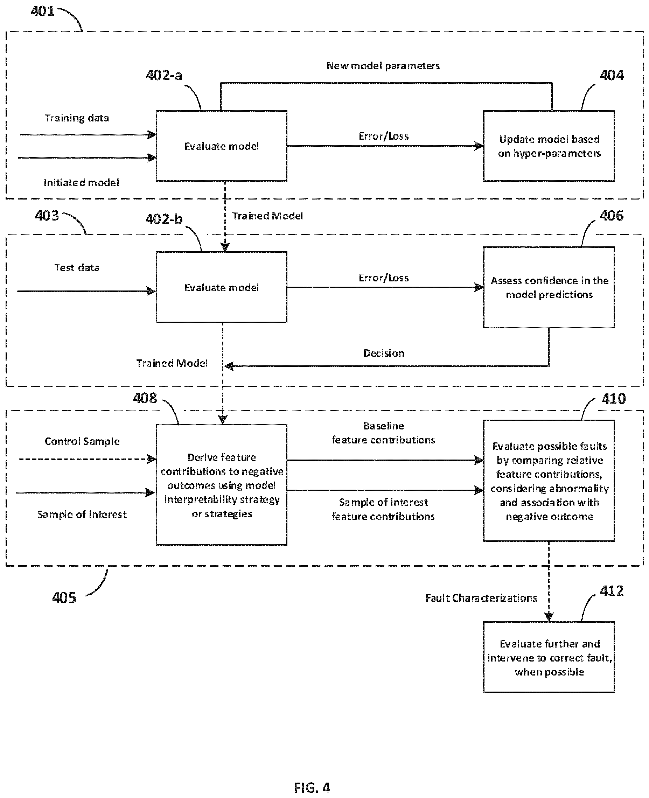

Figure 4 is an example operational block diagram of aspects of a ML-based PFA system, in accordance with example embodiments. In the illustration, example operation is carried out in three phases, shown within three dashed rectangles 401, 403, and 405. In the first phase 401, the ML model is trained using training data. The training data may include a set of CDRs and/or SDRs collected during actual operation of a communication network. In the second phase 403, the trained model may be assessed or evaluated for prediction performance by being applied to test data. The test data may be CDRs and/or SDRs from actual operation, but these data will not have been used to train the model as is the convention in validating the generalizability of models. The term "runtime data records" or "unseen data" may also be used for test data. This may also be used to decide the training parameters for the model for a particular type of network data. As described below, the assessment/evaluation phase 403 may be optional in some analysis scenarios. In the third phase 405, the trained (and possibly further assessed/evaluated) ML model may be applied feature analysis. This is done by using "random data," or "control data," after applying appropriate filters to produce a control, from the training data to derive or generate baseline performance, and "target" or "sample" data representing observed problematic performance characteristics in order to determine the contributions of various features (input) to the observed problematic performance characteristics. When using SHAP and no additional filters/constraints are applied to produce a control, feature contributions may be used without explicit comparison to a baseline as the expected contribution any feature in the training set will be zero (0) to produce the expected (i.e., mean) target output.

Construction, implementation, and application of an example ML-based PFA system may be summarized as follows.

A model may be created by learning a representation of telecommunication data, as well as any other data sources that can be used to augment or inform the telecommunication data. This corresponds to the first phase 401.

The representation of the model may be assessed by applying it to unseen data to confirm that representation generalizes and, thus, can be extended to an analysis of unseen data. This corresponds to the (optional) second phase 403.

Analysis may be performed of problematic data samples by producing a SHAP explainer from the learned model, using it to provide explanations of data in problematic samples. By framing specific questions, where samples of interest are compared against a representative baseline, control sample, divergence between the relative importance of different features can be quantified to highlight specific problems in the telecom data for the problematic sample. This corresponds to the third, feature analysis phase 405.

Following feature analysis in the third phase 405, visualization the impact and severity of features and feature-value pairs based on aggregate SHAP contributions to network degradation for the problematic sample may be carried out or generated. The analysis and visualization can yield results for both a particular fixed outcome (e.g., dropped calls), or the magnitude of the degradation for a continuous case (e.g., lower download average throughputs). The analysis and visualization results may also provide a basis for corrective actions in the network to mitigate or resolve identified problems.

One aspect of the ML-based approach described herein that differs from customary application of machine learning strategies is how the trained model is used in evaluating the connections between operational features of a communication network and network performance. More specifically, while the trained ML model of the ML-based PFA system can be used to predict performance of runtime or test data (or unseen data), its primary function in the context of certain performance and fault analysis is to ensure that the model provides an accurate representation of the operation and performance of the communication network, given the operational features of the training data and their mutual interactions as model inputs in contributing to target outcomes. If the trained model is determined to be sufficiently representative of the relationship between operational features and target outcomes, the contributions of the operational features to predicted performance characteristics can be determined using SHAP, and the results can be applied to the quantitative estimation of the impact of individual operational features on the complex interactions among features that yield the observed network performance. As such, the trained ML model can be applied in studies and evaluations of the possible impact of features on performance may be undertaken using the one or more subsets (or even all) of the training data. This is because such studies rely on the ML model to be representative of the data being evaluated in a way that contrasts problematic samples from non-problematic samples, but not to produce subsequent predictions from runtime or unseen data as inputs. Thus, while overfitting the model so that it may not properly represent future states of the system is possible, the analysis on sufficiently large data may still provide insight into problem diagnosis and facilitate the localization of problems.

Nevertheless, the trained ML model can also be used in applications for which predicted performance characteristics is also or primarily a goal or purpose. One example is the optional second phase 403 shown in Figure 4. In accordance with example embodiments, test data records that are distinct from the training data records may be input to a model evaluation operation 402-b. Like the training data, the test data also include observed performance characteristics that can be compared with the predicted performance characteristics of the trained model to generate error/loss functions that are provided to a confidence assessment operation 406. Since the test data have not been previously seen by the model (i.e., unseen data), confidence assessment can be used as a ensure the trained ML model has a sufficient prediction performance, and possibly applied to further model adjustments. The trained model can also be applied runtime or other unseen data in a prediction mode to provide information that can be used to guide or inform adjustments and/or updates to actual network features.

Further details of training, assessment, and analysis are discussed below.

### Model Training

As shown in Figure 4, model training involves a training loop in which the ML model is evaluated in an evaluation operation 402-a to generate outputs followed by an updating operation 404 to update/adjust model parameters to minimize error/loss functions, after which the model is reevaluated using the updated model parameters. The model is applied to the training data, and the loop begins with an initial model input (e.g., initial parameters). The loop is carried out until a prescribed level of agreement between the model predictions and the ground truths is achieved. As described above, the model takes operational features as inputs and computes predicted performance characteristics as outputs. The ground truths are actual observe performance characteristics of the training data. Once the prescribed or threshold level of prediction performance is attained, the model may be considered to be trained. It may then be used in the optional second, evaluation phase, or directly in the third, analysis phase.

In accordance with example embodiments, after data preparation into a tabular form, an extreme gradient boosting algorithm is used (e.g., XGBoost, LightGBM, CatBoost) to form a tree-based model. This operation may be carried out in a conventional way of creating a machine learning model, and is particularly performant in modeling structured data.

### Model Evaluation

In accordance with example embodiments, model evaluation involves applying the trained model (from the model training phase) to test data in an evaluation operation 402-b, as shown in Figure 4. Using predicted performance characteristics from the trained model and observed performance characteristics from the test data, error/loss functions may be computed and provided to an assessment operation 406, also shown in Figure 4. The assess operation may thereby yield further evaluation of model prediction performance, and may make or effect further adjustments to the ML model parameters. The trained model may then be used in the feature analysis phase. As noted, the test data will typically be distinct from the training data, and as such can be considered unseen data or runtime data which essentially exercise the model's prediction performance (however, one instance of using seen data to evaluate the model is described below).

Model evaluation is standard practice for machine learning, as the goal is typically to create a model to perform predictions on unseen data. This step operates as a check to ensure the model has generalized and not simply memorized the data. However, because the goal of a feature analysis system is to use the model to aggregate or summarize the data for interpretation, this validation step may not always be necessary. Consequently, there are two possible approaches:
One approach evaluates the model against seen data while being reasonable in the constraining of the model size (i.e., there should be fewer model parameters than data points to prevent the model from memorize the training data). This purely analytical approach basically uses the model to gain a representation of the data with the intent of evaluation using SHAP. Then, optionally, the approach could only rely on SHAP feature importances when the input-output associations were correct mapped or have a measure of contribution confidence based on the correctness of the prediction. Adding this optional step will make the approach more robust in ensuring that the feature importances used in assessing a fault are correct and likely makes the most sense for this system. Checking against unseen data may still be a benefit in ensuring that the model does not overfit the data in cases, as described in the approach below.

A second approach, more traditional for machine learning, is to test and evaluate against unseen data prior to using the model representation. This is a more robust approach in that it gives a sense of the models ability to generalize to new data, better ensuring that the representation generalizes to other states of the system. Generalization of the model can be particularly important when evaluating feature importances for unseen data. With such an approach, a model would not necessarily need to be retrained to be used in analyzing new problems on the system from which the original training data was obtained. Again, optionally, the approach could only rely on SHAP feature importances when the input-output associations were correct mapped or have a measure of contribution confidence based on the correctness of the prediction which is more likely to deviate given unseen data.

In accordance with example embodiments, a novel model evaluation for which a test set or validation set is not needed may be used, in contrast to traditional machine learning, at least when the primary goal is not to predict values for unseen data, but is instead to use the model as a form of aggregation explain what's "going on" in the data. Unless there is egregious overfitting the entire dataset may be used to form the ML model.

### Feature analysis

In the feature analysis phase 405, the trained model may be applied separately to a control sample, essentially a random while applying constraints if a particular comparison demands it, of the training data and to a sample of interest that represents some problematic aspect of performance that is also present in the training data. The control sample could be a subset of randomly selected data records from the training data records, or could be the entire training data set. In either case, it is taken to be representative of overall network performance, such that it provides a baseline or control sample of predicted network performance against which predicted performance of the sample of interest can be compared. When taking a random sample for the entire training set, the mean values of all feature contributions is expected to be zero (0), and, consequently, the sample is not explicitly required in cases where only the difference in mean feature contributions are compared. In other words, when comparing mean values and a random sample is an appropriate control, a SHAP of zero (0) can be used as the baseline feature contribution instead of explicitly drawing a number of random records as a control sample, which is why the control sample is shown as a dashed line.

In accordance with example embodiments, the control sample and a sample of interest may be input to feature-contribution derivation operation 408. This operation first applies the trained ML model to the two input sets to separately compute predicted performance characteristics. The predicted performance characteristics of the control sample (which, again, may be the entire training data set when the model itself is considered) yields a representation of baseline performance. The predicted performance characteristics of the problematic sample yields a representation of performance that is problematic in some sense. More specifically, the problematic sample may be selected specifically on the basis of an observed performance characteristic that is considered problematic, suboptimal, or otherwise representative of degraded performance. For example, the observed dropped call rate in a particular region may be unacceptably high compared to an observed dropped call rate averaged over all regions. The data composing the problematic sample may thus be selected to include all records for the particular region that were dropped. This is an example of how posing a question may be translated to problematic sample selection tailored to evaluation and/or investigation of specific feature contributions using the ML model and explainer analysis.

Evaluation of the ML model is applied separately to each data record (e.g., each CDR and/or SDR) of each data set which is used to characterize the control sample data set and the problematic sample data set. In this way, the contributions of input elements are computed for each record of both input data sets. To do this, an algorithm such as SHAP is applied to each record, to provide a computational analysis to determine a fair distribution of quantitative contributions of each of the operational features to the one or more of the predicted performance characteristics computed by the ML model for the respective record. Because complex models can produce a non-linear mapping of input feature-value pairs to output performance characteristics, these quantitative contributions cannot be derived by linear analytical methods. Rather, the fair distribution criteria in an additive explanation strategy like SHAP values ensures that for each given predicted performance characteristic, the sum of the contributions of each of the input feature-value pairs adds up to the difference between the predicted performance characteristic for the record and the mean (i.e., expected) performance characteristic of all records in the model training set. As such, the fair-distribution approach effectively yields an empirically derived quantitative contribution for each input feature-value pair in a record.

Carrying out this analysis record-by-record for specific performance characteristics generates a collection of feature-contribution data to which a variety of statistical analyses may be applied in order to investigate a range of questions relating to the impact and/or influence of individual feature-value pairs and/or classes or categories of features on network performance. Further, the feature-contribution data generated from the control sample of data records can provide baseline feature contributions for one or more predicted performance characteristics output by the ML model. Similarly, the feature-contribution data generated from the problematic sample of data records can provide a form of diagnostic feature contributions for one or more predicted performance characteristics for which corresponding observed performance characteristics have been deemed problematic or suboptimal according to some criteria. The baseline contributions values and the problematic sample (diagnostic) feature contributions may be input to performance/fault analysis operation 410, also shown in Figure 4. This operation may include a variety of forms of analyses for addressing general and/or specific performance issues in different ways or from different angles, for example. Non-limiting examples of such analyses, some including particular types of visualizations, are discussed in more detail below.

In accordance with example embodiments, results and outcomes from the performance/fault analysis operation 410 may be applied to further evaluations, operational interventions, and/or adjustment of actual network components. These operations are grouped collectively as further analyses/actions 412 in Figure 4.

In accordance with example embodiments, determining a fair distribution of quantitative contributions of input feature-value pairs to output predicted performance characteristics - and more generally a fair distribution of quantitative contributions of inputs to output of a ML model - may be accomplished using an interpretability algorithm called SHapley Additive explanations to derive Shapley values. In an example implementation, a SHAP explainer may be created for a model based on an open-source framework using the SHAP framework available online at the URL https://github.com/slundberg/shap, which is licensed to allow commercial use under MIT as specified at the URL https://github.com/slundberg/shap/blob/master/LICENSE.

In particular an implementation called TreeExplainer may be used for polynomial time computation, which makes this strategy feasible in for a fault analysis system at a scale of the telecommunications data considered herein. (See, Lundberg et al., "From local explanations to global understanding with explainable AI for trees," Nature Machine Intelligence, VOL 2, January 2020, pp. 56-67.)

A fault analysis system may work by first framing an initial question for the system. Non-limiting examples of such initial questions include:
What features contribute to throughput degradation in a problematic geographical area of the RAN network?
What features contribute to throughput degradation for the cells with the lowest CDR average throughput in a large geographical area?
What features contribute to dropped calls during peak hour for a large geographical area?
What layer of the telecommunications network is most impacting network service performance at this time?
SHAP values may then be computed for sets of data records on which to perform fault analysis on a set of data that satisfies the question criteria. By way of example, each record of data could be a CDR or SDR. SHAP values offer a fair contribution for each feature-value pair in the evaluated record to the prediction(s) of the model. Thus, calculating SHAP over a set of records can be used to produce distributions of relative feature importance, thus allowing for the characterization of a larger sample of records.

The characterization of a fault works by evaluating relative importance of specific feature contributions to a problematic outcome as compared to a normal contribution of that feature from a representative baseline control group. To do this, feature impact may be evaluated by comparing SHAP values distributions from the sample of interest to an appropriate baseline, which can be randomly sampled baseline or a selectively sampled baseline constructed to be representative by selective sampling from a non-problematic data set (i.e., control sample). The difference can be quantified, for example, by computing an effect size (e.g, Hedge's g) for a difference that compares the baseline importance of a specific feature in the problematic sample case to its importance in the base case. This offers an objective way to gauge the impact of feature importance given the full context presented in the problematic sample. Distances between sample input features and elements can be compared using non-parametric distances (e.g., Wasserstein distances), or other distribution comparison strategies allowing the quantification of how dissimilar a problematic sample is from a representative baseline.

### Visualization

Conventional visualization libraries included in the SHAP project are primarily distribution-based, without aggregation across input elements importances, and do not typically include much in the way of feature-value pair specific comparisons across groups to interpret the contributions of individual features. Yet, this is a particularly important framing when trying to qualify specific values like instances of categorical variables (e.g., handset type, cell-ID) and in reducing the dimensionality of the problem to provide a more concise answer. For example, knowing that handset types used in a particular region were problematic is not as valuable as knowing which handset types were problematic. Similarly, by grouping metrics as quantiles, the SHAP values can be considered for specific ranges.

One approach to show the most significant input elements contributing to degradation for a problematic sample is by computing impact and severity for a problematic sample. An example is shown in Table 2. Specifically, a region of interest was chosen from coordinates on a map and CDRs falling in this region were selected for analysis. In the example, severity is used to indicate a throughput reduction (i.e., negative SHAP value) attributed by the model to examples containing the particular input element or quantile for a metric. Because not all CDRs contain this input element, the severity may be scaled by the fraction of CDRs containing the element(i.e., by multiplying the severity by the fraction) to produce the impact of this input element to throughput reduction across the sample of interest. In an investigation of problematic throughput, the highest impact input elements may therefore be of interest in diagnosing the source the problem based on the model representation.

In Table 2, the items in the column labeled "Elements" are feature-value pairs. For example, the first two table rows each show severity and impact for a feature labeled "End Cell eNodeB" that corresponds to an eNodeB that terminates a call. The feature-value pairs for the two rows are different: each feature valued identifies a specific eNodeB. The impact of each given eNodeB on throughput is a severity, determined from the average SHAP value for that feature-value pairing, scaled by the fraction of data records (e.g., CDRs) corresponding to call traces that used the given eNodeB.

**Table 2**

| Elements | | Impact | Severity | Fraction |
|---|---|---|---|---|
| End Cell eNodeB | 217287 | 444.42 | 854.65 | 0.52 |
| End Cell eNodeB | 217968 | 160.07 | 666.96 | 0.24 |
| Detailed Serice ID | Terminating LTE Data Call | 159.61 | 693.96 | 0.23 |
| End Cell | 217287-14 | 152.14 | 422.61 | 0.36 |
| Last RSRP Quantile-1 | (-120.5, -106.5] | 125.17 | 625.85 | 0.20 |

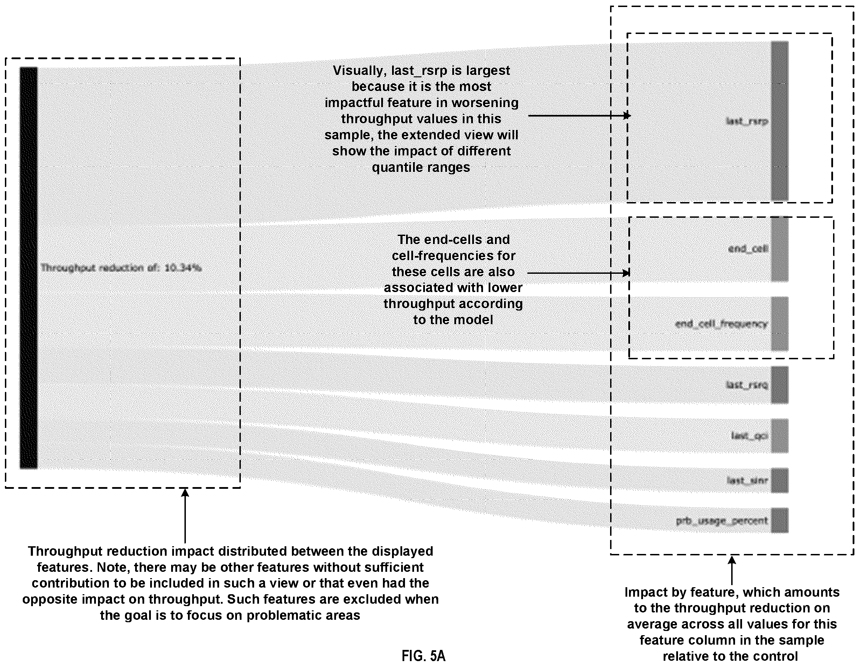

The impact relationships can also be visualized with a Sankey flow-diagram. For the example of throughput degradation, such a diagram shows the relationship between the total degradation relative to the expected throughput. Figure 5A represents a high-level view showing the impact of entire features, which may include many input elements that can be analyzed in an aggregated fashion at the feature level. The left side shows the total throughput reduction observed by the problematic features, as measured by the reduction in throughput associated with these features by the model as determined using SHAP. The right side of the figure shows the different contributions of feature groups by their respective impact to feature degradation for the sample, which is represented by the size of the node.

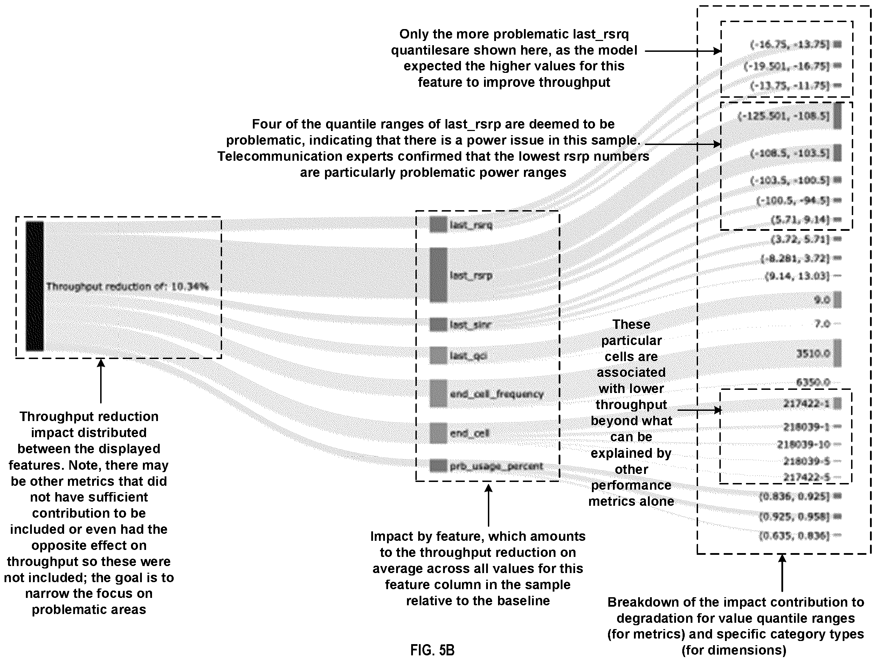

Figure 5B represents an extended view to also include a meaningful set of input elements on the right. In this example visualization, the impact of continuous input elements are represented as top k-quantiles and dimension input elements as a list the top-5 by impact. These are only displayed if they have an impact on degradation above some predefined threshold (e.g., an average impact greater 100 average download throughput). Again, the size of the node represents proportion of impact or contribution to degradation by the input element, feature-value pair or feature-quantile. The flow diagram highlights subcomponents in each grouping that can be pertinent and might help narrow the search to problematic areas of the sample.

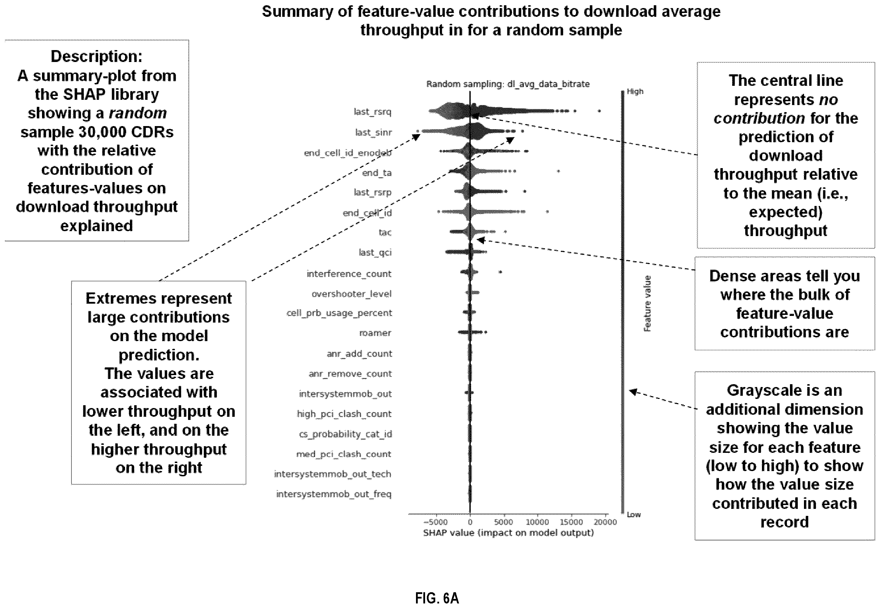

Figure 6A is an example visualization of a SHAP summary plot using the SHAP standard library for the example case of average download throughput (i.e., the predicted performance characteristic) that illustrates statistical density distributions of SHAP values of respective input features with respect to the mean or average values the respective features. The distribution for each features is shown on a horizontal line, with each feature labeled to the left. A vertical line through all the distributions represents the average contribution baseline, for which a feature has no contribution to increasing or decreasing throughput relative to the average (i.e., expected) throughput in model training data. As indicated, for any given input feature, distribution values to the left of the average represent high feature contribution to reducing throughput, while values to the right represent feature contribution in increasing throughput. Such a SHAP summary diagram may be generated for baseline data and sample of interest data for which degradation is observed.

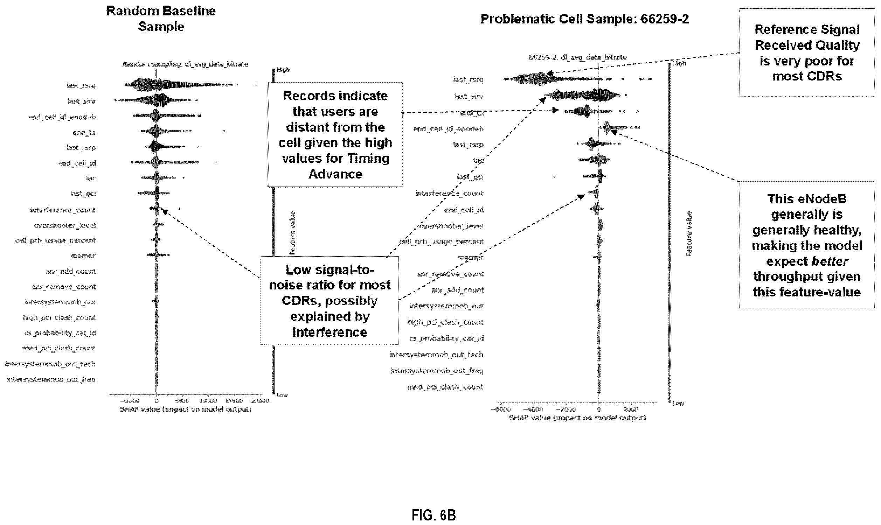

Figure 6B shows the comparison between a baseline SHAP summary on the left as observed in 6A and a sample of interest SHAP summary of records drawn from the problematic cell 66259-2. Comparing the control sample, in this case a random sample drawn without further filtering, to the problematic sample given the same predicted performance characteristic may then be used to identify distribution differences in features, and to qualitatively judge the evident importance of each feature to an observed problem or performance issue. In the example shown in Figure 6B, records from the problematic cell 66259-2 show an outsided influence of last_rsrq, referring to the Reference Signal Received Quality (RSRQ) which is consistently reducing throughput for the sample of interest. Importantly, while this this RSRQ is highly associated to observed average download throughput in the baseline control sample, the results of the sample of interest more skewed to lowering throughput and are less evenly distributed than the control sample. There is also a low Signal-to-Noise Ratio (SINR) in most records of the problematic cell sample as is made apparent when comparing it visually to the control sample. Interference on the cell might explain the low SINR for the control sample despite the model not relying heavily on interference as a feature. Finally, the eNodeB for the problematic cell sample is generally healthy, where the model expected better throughput performance given that eNodeB, so the particular eNodeB for this cell can be discounted in this analysis.

To faciliate visual inspection, superpositions of the distributions could be used for control and sample of interest distributions. Moreover, manual or visual inspection is not required if, instead, statistical comparison strategies are used to compare the distributions of input element importances automatically. In an automated system like this, visualizations could be used as support for users of the system.

### D. Extensions to Analysis Techniques

### Contrasting representative baselines

In accordance with example embodiments, a ML-based PFA system provides a contrastive view of sample baseline performance versus problematic sample performance. Machine learning has a further advantage that it can be used to represent large amounts of data within which there are many complex interactions with a KPI. Because training and testing large machine learning models can be expensive, it can be impractical to devise specific models to represent every possible baseline. In accordance with example embodiments, a general model may be developed to learn a representation of the data for an outcome of interest (e.g., download throughput). Then when, for example, a particular cell in of the network appears to be problematic relative as a representative baseline (e.g., the surrounding cells, or other cells connected to a particular EnodeB, or cells of the same carrier frequency, or the surrounding geographical area), the model can be applied as described above to evaluate how the particular cell and other operational features interact to impact the problematic performance. While a randomly sampled baseline of the network will offer the average outcome for the observed performance characteristic, an effective SHAP contribution of zero for each feature, a more selective baseline may offer a more appropriate comparison by controlling for certain input elements.

For example, a cell carrier frequency may have physical properties that will allow for better throughput transmission. Thus, selecting CDRs that were connected to a nearby cell of the same frequency may be a better choice in isolating true performance differences and possible problems. This can be used to correct for relative contributions of specific features that may be relevant with respect to all samples introduced to the model, but not necessarily relevant when compared to an appropriate baseline.

The strategies and techniques described above may be extended to provide further analyses and investigative capabilities. Some such extensions are discussed below.

In applying a ML-based PFA system as analytical tool, it may not always be possible to always know the specific question or questions to ask *a priori.* In such instances, a possible alternative approach may be:
Training a model to learn a representation of all samples in a broad area of the network.
Asking a question based on applied filters (e.g., what explains the worst cells performance?).
Selecting an appropriate baseline sample based on input elements we decide to control for (e.g., geographical region, frequency, etc.).

Comparing SHAP results obtained for both samples.

This strategy could be used, for example, by domain experts to ask specific questions while controlling for known differences in possible outcomes by the model.

### Evaluating differences between the samples

Evaluating differences between the control sample and problematic sample can be done at different levels. Some examples follow.

### Quantifying deviation between a baseline composition to sample of interest

Here a goal is to evaluate whether there is a difference between the two samples based on the general composition of contributions across different features.

In particular, the important composition difference between the problematic sample and the baseline sample will indicate the most substantial differences in the problematic sample relative to some control state of the system. When comparing different problematic samples to each other, having feature importance compositions that are sufficiently different can be used to differentiate between underlying problems or use-cases. While SHAP on its own can provide the expected contributions of features to the outcome, a change in the general composition of feature importances can be used to better characterize whether and where a problem has occurred. This comparison can allow the automation to determine whether samples are different and by how much based on composition and prior to investigating individual feature contributions.

Non-liming examples of possible distribution comparison strategies between feature importance distributions may include:
Wasserstein distance;
Jensen-Shanon divergence; and
Kullback-Leibler divergence.

### Quantify difference between individual feature, feature-value pair contributions

Here the goal is to evaluate whether there is a difference between the two samples based on the general composition of contributions for a particular feature or feature-value pair.

This is the more straightforward comparison strategy that compares the distributions of SHAP contributions of particular input features or elements in one sample against that same feature's contributions in another sample to see whether there is a meaningful difference. Non-liming examples of possible comparison strategies may include:
Wasserstein distance;
Jensen-Shanon divergence; and
Magnitudes with hedge's G to quantify results or t-tests.

### Fingerprinting

Fingerprinting extends the idea of qualifying and quantifying sample of interest deviation from the baseline for business applications. A fingerprint may be defined as a input element set of importances, which may be a subset of the set of all possible input elements and include relationships between these input elements importances, used to identify particular use cases. A fingerprint describes the set of key input elements which can be used to distinguish a problematic sample to a baseline/control sample. Further, a fingerprint set of elements may also be used to distinguish between problematic sample types or use cases.

These input element sets can be formed in different ways, such as using the ratio of contributing input elements in order to distinguish between specific use cases and a normal state of the system, as well as between use cases that may share certain input element properties but not others. This approach is useful in further automating the diagnosis and classification of problems in the system as the resulting fingerprint of element contributions can be applied as business rules that map a set of contributing elements and/or the relative contributions of these elements to degradation on a system into a human interpretable characterization of a system deficiency or problem.

In order to uncover the correct composition and ratios for fingerprints, domain experts may characterize expected degradation features to create business rules for particular problems or use-cases. These fingerprints are more general than typical rule-based systems, as the learning model will establish the relative contributions of key components while the business rules will establish what these relative contributions of key components mean as a diagnostic.

Alternatively, simulating the problem in a real system under variable loads and recording the impacting degradation could be used to generate fingerprints for problems or use-cases. In order to classify a fingerprint, the model interpretation will provide the relative contributions used to distinguish between use cases separately from the severity of the use case (i.e., two use cases may vary in severity while having the same relative contributions in fingerprint by their respective input elements).

Comparing between use cases can be done in several ways. For instance, by setting a minimum distance (e.g., Wasserstein distance) between the fingerprint result obtained for a problem case and a use case template fingerprint, where the template was created by evaluating the differences between the baseline and the sample. Another could be to compare the input elements importance for classifying a use case using rule-based procedure(e.g., the relative importance of input elements A > B > Others in a layer implies use case 1 and B > A > Others implies use case 2). Further, classification strategies, for instance through the application of new learned models trained on the determined input element importances, could be used to compare, contrast and evaluate fingerprints. Note that fingerprints can be composed of input elements within layer and between different layers, where the layer filters such as the composition features to monitor and include can be established by domain experts. Furthermore, provided a generating process for system problems in a simulated network environment, high-level classification labels from the generating process could be coupled with any classification algorithms.

### Noisy-Neighbor Fingerprint Example

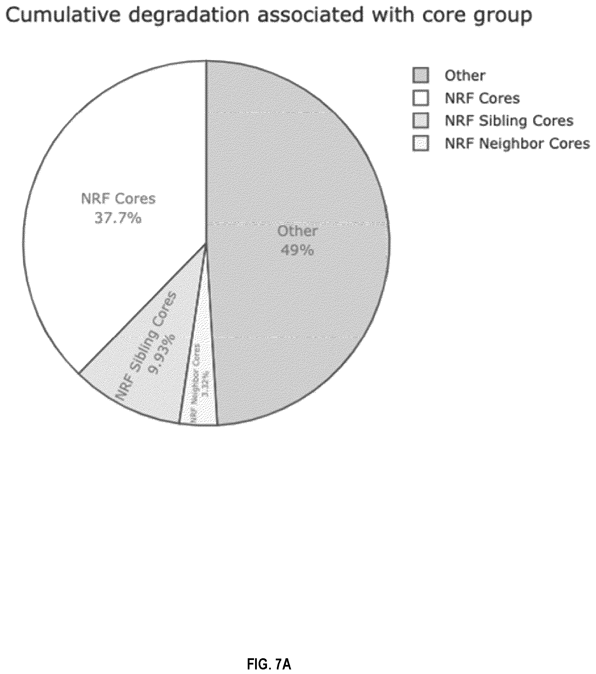

In the example fingerprint graphed in Figure 7A, pinning functionality to specific cores in the CPU layer of the system allows us to know which cores are running the Network Repository Function (NRF) Cores group (i.e., those cores running the 5G service) and NRF Sibling Cores group (those cores sharing cache resources with the NRF Cores). In this fingerprint, Other and NRF Neighbor Cores groups both serve as controls, where the Other cores have functions in the system unrelated to the 5G service and the NRF Neighbor Cores which have no functions in the system but receive the same stressors as the NRF Cores and NRF Sibling cores but should not negatively impact the server.

Figure 7A illustrated by way of example the fingerprint for the importances on the stress applied to NRF Sibling Cores. The pie chart shows the total contribution to degradation of the different input element groups, as established by the CPU pinning. These ratios displayed are established by zeroing any group with summed contributions to degradation lower than zero. Alternatively, in cases where positive and negative contributions to the observed performance characteristic are factored in, the group with the most negative contribution to degradation can act as the floor with all other group values adjusted by treating the negative contribution as the floor and adding the negation of its contribution value to all groups (e.g., if A=-10, B=5, C=6, add 10 to each producing A=0, B=15, A=16) prior to calculating the relative contributions. To display the relative contributions these can be put as a fraction or percentage of the sum of all contribution. In this example, the fingerprint shows the NRF Cores account for 37.7% of the degradation observed and the NRF Sibling Cores account for 9.93% of the degradation observed over the selected period.

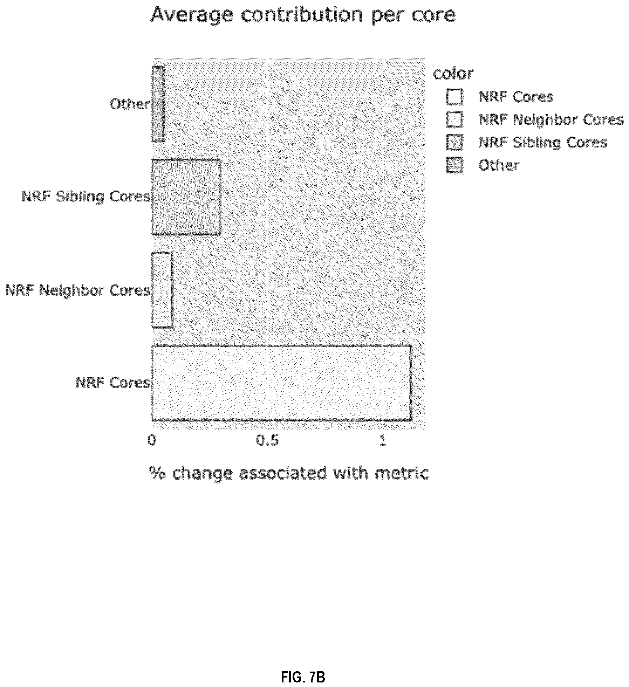

Because there may unequal numbers of input elements in each group, an alternative representation bar chart in Figure 7B shows the contribution normalized by the number of input elements (i.e., cores) in the group, which may be better suited to evaluate large control groups and may also be useful as a fingerprint for some use cases. Variations and combinations of these aggregation strategies can be used to establish fingerprints, if these are needed to differentiate between fingerprints or facilitate the creation of business rules used to detect differences in the composition of underlying input element contributions to a degradation. These higher-level business rules allow the business to distinguish between use cases, when necessary, to determine what the problem is from a business and/or remediations standpoint.

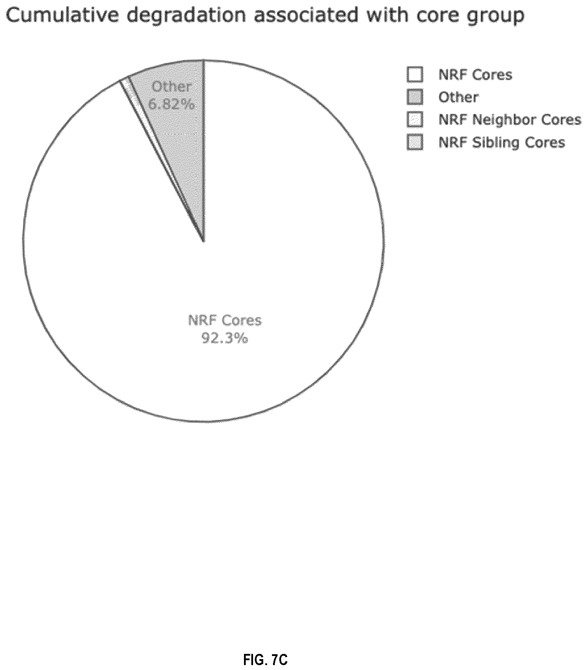

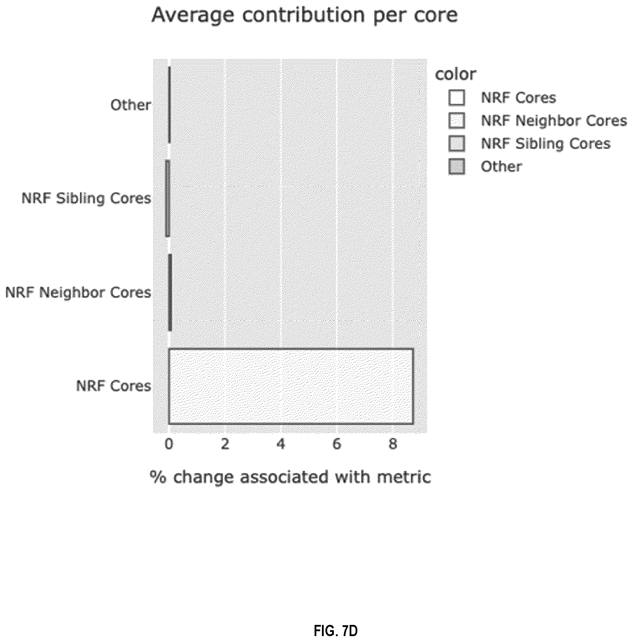

Pie chart and bar chart representations in Figures 7C and 7D show the fingerprint for the importances on the stress applied to the main group of NRF cores, and not group of the NRF Sibling Cores. Here, it is expected that the stress applied should more directly impact the NRF Cores and does not accomplish this through the NRF Sibling Cores. Visually comparing Figures 7A and 7B with Figures 7C and 7D may distinguish between the location of the fault. This comparison could be automated by, for instance, comparing the ratio of contributions of the main NRF and Sibling Cores and possibly also by evaluating the magnitude of the NRF Core contribution and deterioration in the observed performance characteristic more generally.

### Discovering clusters of problematic input elements

The following strategy was developed to find clusters of *input elements* that occur and are problematic together. Evaluating characteristics as they occur together can better explain problems in the sample. Presenting characteristics individually for their contribution to degradation with a Shapley additive explanation (SHAP) provides a fair attribution for each features contribution to the prediction of the model, without deliberate filtering on combination characteristics SHAP will not indicate the importance of clusters as they appear together.

Effectively, this proposed strategy is used find clusters of input elements based on occurrence frequency in the sample set in order of importance (e.g., SHAP) extracted from the machine learning model. First, frequent pattern mining (FPM), also known as Association Rule Mining, is used to find the most prevalent patterns of co-occurrence in records of the sample of interest to ensure the patterns occur frequently enough to explain degradation at in the sample. After discovering frequent patterns to establish "characteristic clusters," the importance of the characteristic cluster is determined by summing the importances of input elements in the cluster, as determined by the learned model, and multiplying by fraction of cases in the sample having the specific pattern or characteristic cluster. A non-limiting example sequence of operations is described below.

### Finding candidate characteristic clusters

1. Prepare data by transforming continuous feature metrics to feature categories in FPM (e.g., by applying a binning strategy like using quantile ranges), while feature that are already categorical can be left unchanged.
2. (Optional) Prefilter features based on satisfying a:
   Minimum importance criteria based on feature statistics from the machine learning interpretation, this can be relative to the number of features in a group where a lower instance count will reduce the number of occurrences;
   Minimum support threshold for co-occurrence in the dataset. This is standard in FPM and, given a higher support threshold, will reduce computation time; and/or
   All other FPM parameters can be explored to find the most pertinent patterns.
3. Get frequently occuring patterns of input elements as they co-occur in records across the sample of interest by using a FPM algorithm such as FP-growth.

### Evaluate cluster feature importance

Given a tabular sample with input feature columns and one record per row, for each cluster, until obtaining the desired characteristic cluster size, do:
4. Select only sample rows with characteristic cluster by filtering.
5. Average per-row contributions of each input element in the characteristic cluster for the rows selected in step 4.
6. Sum the average input element contributions from step 5 and multiply these by the fraction of rows in the sample of interest with the characteristic cluster to get the characteristic cluster impact(i.e., sum(cluster_importances) × fraction_with_cluster = cluster_impact).

Sorted in order of decreasing impact, the top characteristic clusters will provide combinations of input elements that most impacted the system by: 1) reducing the characteristic cluster impact of those characteristic clusters with infrequent occurrence in the sample of interest, which will ensure clusters do not get too large; and 2) provide an additive contribution by the model of the severity attributed to those input elements when these occur together.

Further pruning can be done to improve the diversity in the presented characteristic clusters. Pruning can include, but is not limited, enforcing that parent characteristic clusters (i.e., having a subset of input elements) are ignored when child characteristic clusters have higher feature importances or impact on the sample of interest.

### Comparison to analysis structure prior to extension

There are a few key differences between the PFA described prior to the clustering section and the Cluster PFA described in this extensions. In regular PFA, the input features or elements are evaluated or aggregated individually. In Cluster PFA, a frequent pattern mining operation is computed prior to determining input element clusters in records prior to other analysis of input elements. Thus, in Cluster PFA the grouping of characteristics clusters may involve two steps: 1) input elements are evaluated based on their co-occurrence in the sample of interest to find candidate characteristic clusters; and 2) the importance value of these characteristic clusters is attributed based on the model importance which is used to find the most impactful characteristic clusters.

In PFA without clustering, mean severity represents the characteristic contribution relative to a baseline (e.g., mean SHAP difference for input elements in the sample of interest relative to the control sample), the fraction represents the number of occurrences of specific input elements over the total possible occurrences in records of the sample of interest, and the impact on the sample is the calculated fraction multiplied by the severity. In Cluster PFA, the mean severity represents the input element(s) group contribution relative to the baseline sample, the cluster fraction represents the fraction of occurrence of the cluster combination of input elements over the total possible occurrences in records of that sample, and the cluster impact is the cluster impact multiplied by the cluster severity.

Note, clusters composed of one single input element in Cluster PFA will produce the same result as PFA. Thus, if clusters composed of one single input element are allowed, the results of the Cluster PFA are a superset of the results of PFA.

### Example output for importance cluster 1

An example characteristic cluster that contains a common pattern of input elements for a geographical sample area with low download throughput (i.e., a sample of interest) is shown in Table 3:

**Table 3**

| | |
|---|---|
| End Cell eNodeB | 217287 |
| End Cell | 217287-14 |
| End Cell Carrier Frequency | 6350 |

These three input elements appear in 36% of the CDRs of the sample of interest which was selected by highlighting a problematic area of the network. The model importance strategy attributes a total reduction of 19.72% relative to a baseline level of performance from the input elements in the characteristic cluster alone.

A dimension/metric view in Table 7 shows the degradation associated with all input elements in the sample after applying the filter described in step 4. This can provide a more nuanced view by including other possible problems that were not selected in the cluster, such as prb_usage_percent metric levels indicating heavy cell usage and possible congestion. In general, the binning strategy used to transform continuous feature metric values into categorical values may change the impact of the cluster and, thus, different binning strategies may be used when appropriate for the use case. For instance, one strategy would be to dynamically decide the number of bins for a metric based on underlying statistical and distribution properties instead of only relying on fixed quantile ranges.

Example baseline statistics are shown in Table 4:

**Table 4**

| Statistic | Download Throughput Value |
|---|---|
| Mean | 6828.49 |

An example subset of sample with a specific characteristic cluster is shown in Table 5:

**Table 5**

| Statistic | Download Throughput Value |
|---|---|
| Cluster Impact | 486.87 |
| Cluster Severity | 1346.24 |
| Subset Mean | 1962.62 |

Table 6 shows example reductions specific to input elements in the characteristic cluster, accounting for 19.72% of the reduction in Throughput based on the model expectation for the cluster subset:

**Table 6**

| Element | | Reduction(%) |
|---|---|---|
| End Cell eNodeB | 217287 | -12.40 |
| End Cell | 217287-14 | -6.16 |
| End Cell Carrier Frequency | 6350 | -1.15 |
| Total | | -19.72 |

After discovering a cluster, the other input elements in the set given the characteristic cluster can be analyzed. An example of dimension/metric view is shown in Table 7:

**Table 7**

| Dimensions | Reduction(%) | Metric | Reduction(%) |
|---|---|---|---|
| End Cell eNodeB | -12.40 | PRB Usage Fraction | -6.37 |
| End Cell | -6.16 | Last RSRP | -5.00 |
| End Cell Carrier Frequency | -1.15 | Last RSRQ | -4.10 |
| Last QCI | -0.64 | End Timing Advance | -2.00 |
| Detailed Service ID | -0.38 | Last SINR | -1.81 |
| Handset Type | -0.16 | | |
| Manufacturer | -0.03 | | |
| Intersystem Mob Out | -0.01 | | |

### Example output for importance cluster 2

Another example of a characteristic cluster in the same geographical sample area with low download throughput is shown in Table 8:

**Table 8**

| | |
|---|---|
| End Cell eNodeB | 217287 |
| End Cell | 217287-14 |
| End Cell Carrier Frequency | 6350 |
| PRB Usage Fraction | (0.966, 0.987] |

The four input elements in the characteristic cluster appear in 20% of the CDRs of the sample which was selected by highlighting a problematic area of the network. This characteristic cluster shares all the input elements of its parent/superset in the previously described characteristic cluster example, but has an additional quantile range characteristic for PRB Usage Fraction of (0.966, 0.987]. The subset of the sample of interest with the characteristic cluster has a lower impact, as indicated by way of example in Table 9 and Table 10:

**Table 9**

| Statistic | Download Throughput Value |
|---|---|
| Cluster Impact | 347.28 |
| Cluster Severity | 1744.87 |
| Subset Mean | 1730.58 |

**Table 10**

| Characteristic | | Reduction(%) |
|---|---|---|
| End Cell eNodeB | 217287 | -11.65 |
| PRB Usage Fraction | (0.966, 0.987] | -6.42 |
| End Cell | 217287-14 | -6.31 |
| End-cell Carrier Frequency | 6350 | -1.18 |
| Total | | -25.55 |

The system could be tuned to favor larger explanations like this through pruning by, for example, setting a minimum ratio of impact_reduction/fraction_reduction from parent to child. Limiting the prb_usage_percent to the quantile range (0.966, 0.987] decreased the fraction of affected cases to 20% from 36% in the previous example, but is more precise in indicating the problem. Such pruning constraints can ensure that the clusters chosen are more descriptive of the problem observed in the sample.

### Real-time and time-based analysis

Example embodiments of PFA techniques and PFA systems may also be extended to be able to provide real-time analysis of communication networks as they operate, as well time-based analyses in which the input data may further be treated as time series data, or the like. In accordance with example embodiments, a time-based algorithm could be used for network monitoring, problem analysis and optimization when analyzing data covering an extended time span. Such an algorithm could also be used as part of real-time operational analytics for communications networks. In an example embodiment, an implementation of the algorithm could be executed periodically or continuously, and can feed an operational analytics system configured for deriving the evolution of possible causes and/or correlations in network performance over time.

When the data are represented across time, the key difference is that, instead of representing input elements from uniquely as a discrete record instance (e.g., a CDR trace on a network), the input elements represent the aggregate performance of metrics and/or other system properties over a period of time (e.g., an aggregate state per minute). By aligning different inputs to the system temporally with an outcome of interest, this strategy can be used to evaluate the relationship between distant inputs, or even layers of analysis, with outcomes.

This strategy can be employed using time-series data provided by network monitoring systems and, thus, has a wide range of applications for communication systems. Given a machine learning model that is trained periodically on normal, and abnormal or problematic data, an event can be triggered, such degradation on a observed performance characteristic below a threshold of acceptable performance or the detection of an anomaly can be used to select an event start and end time on which to perform further analysis through model interpretation. As such, interpretation of the model for the input elements (i.e., the context) for the duration of the time window when the observed performance characteristic degradation or or anomaly occurred is used to explain possible causes for the event occurrence.

### Service Level Assurance Use Case

One particularly useful application for this model interpretation over time-series is in monitoring and troubleshooting systems. In the telecommunication field, such an approach can be used to offer service level assurance, where the service layer is monitored continuously for degradation and anomalies. The underlying telemetry from layers of the system can then be mapped to the result of one or more service tests qualifying the service layer using a learned model. Given the input elements as context over the time points where degradation or an anomaly occurred, model interpretation can be used to explain the degradation using different layers of the input elements. This allows for the localization of problems to specific layers of the communications network and can help direct further investigation.

For instance, given a 5G telecommunications service running an application layer that provides functionality for end-users, the supporting layers can include:
A network layer with elements such as the 5G Core, radio-access-network (RAN), separate user planes and control planes, etc. serving various essential functions for operating the network;
A virtualization layer containing data that organizes and abstracts the allocation of resources from; and
A physical infrastructure layer that will include physical elements such as the fiber and bare-metal servers and hardware used to run the system.

Telemetry data from one or more layers can be used as input elements to train models to associate to one or more observed performance characteristic that is a key performance indicator (KPI) to qualify the service. These KPIs can include tests for performance, quality of experience, etc. This strategy offers a way to manage the high dimensionality of inputs, providing visibility and the ability to focus on those input elements that were most associated with certain problematic KPI test outcomes. Taken more broadly, layers can present different levels of analysis in which localizing an issue is meaningful for further exploration and remediation, which can be especially challenging in complex communication networks. These layers can be represented by separate models when the goal is fine-grained and specific analysis of the most relevant layers or a unified model when the goal is to better establish the point of failure given multiple possible problems across the layers.

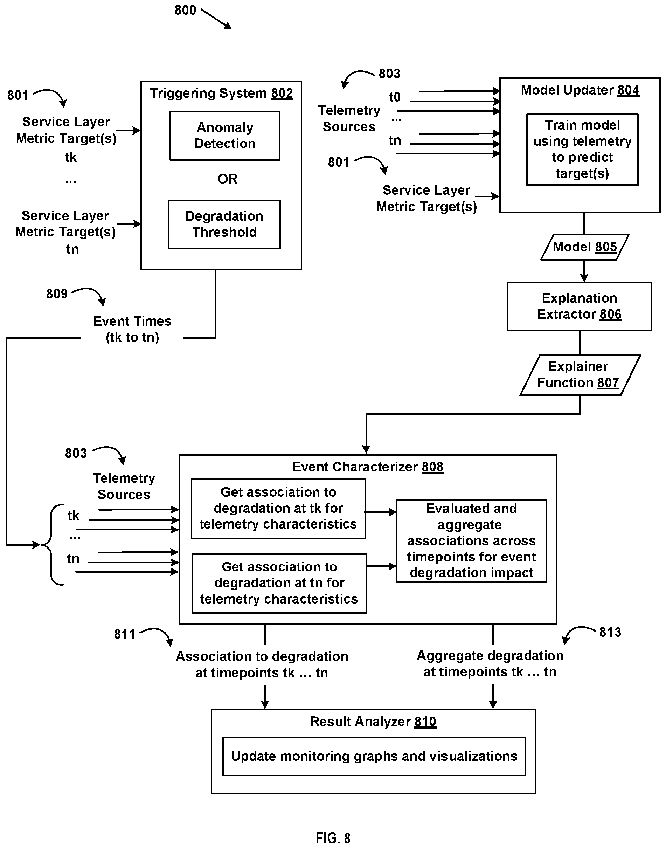

Figure 8 illustrates an example time series analysis system 800 and how it could be applied in such a use case. In the illustration, example operation may be carried out in five modules, shown within elements 802, 804, 806, 808, and 810. Time components are represented as t0 representing initial time zero (0) when model training begins, tk representing the time the event starts k, and tn when the last timepoint n (e.g., the current time) to close the event times 809 ranging from tk to tn. The Triggering System 802 may be a module of the monitoring system that serves to find the temporal range for event times 809 for one or more service layer observed performance characteristics that are KPIs for the system being monitored. When an event occurs, whether due to an anomaly and/or sufficient degradation on one or more KPIs being monitored by the Triggering System 802, Event Times 809 from time ranges tk to tn provide the bounds for evaluation for the Event Characterizer 808.

The Model Updater 804 and Explanation Extractor 806 run in parallel to the Triggering System 802. The Model Updater 804 is a process that may be used to train a model 805 on timepoints from t0 to tn that maps timepoints for telemetry sources 803 to one or more service layer metrics 801. The Explanation Extractor 806 gets an explainer function 807 for the trained model 805 that can be used by the Event Characterizer. The Model Updater 804 and Explanation Extractor 806 can run periodically or on demand from users or another process.

The Event Characterizer 808 evaluates telemetry sources 801 for the event times produced by the Triggering System 802 using the explainer function 807. Evaluation by 808 can include the characterization at different distinct timepoints producing degradation by timepoint 811 from tk and tn. There results can also determine the aggregate event degradation 813 as severity, fraction and impact for the entirety of the event (i.e., input element importances in the telemetry sources aggregated across event times 809). Finally, both degradation by timepoint 811 and aggregate event degradation 813 can be processed by a Result Analyzer 810 to make the results more useful by providing one or more additional functions such as updating dashboards, evaluating fingerprints in the input elements associated with degradations, providing remediation options for system users, triggering new analysis.

### Service Level Assurance on 5G Network example

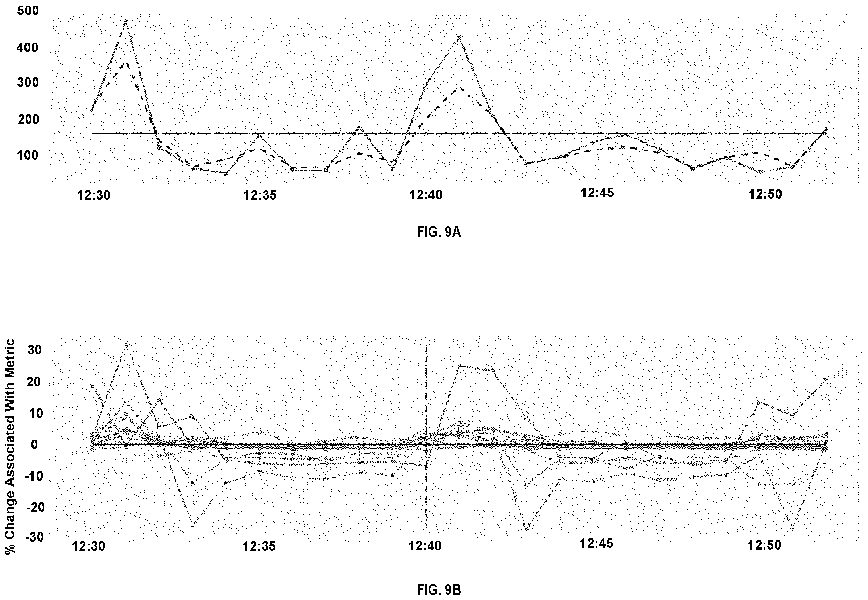

For demonstration and development, among other purposes, a prototype of the described system was built using a 5G server environment. For the use-case, CPU cores were pinned to specific tasks on the system. Perturbations where heavy loads were applied to specific cores were used to generate a noisy-neighbor use cases, either on the group of main cores running the 5G service or the group of sibling cores sharing resources with the core running the 5G service via hyper-threading. A test of the KPI for the 5G service, the connection time, was used as a target for the model and was monitored for degradation. Graphical representation of example results using the described strategy are displayed in Figures 9A and 9B.

The graph in Figure 9A demonstrates the time-series of the service-level test, or KPI, used as a model target that indicates the time to connect to a 5G service each minute. The solid, variable line of Figure 9A indicates the ground truth results for the service KPI, the dashed line indicates the model expectation at those time points based on the underlying telemetry input elements (i.e., the context) at that time point and the straight, solid line represents the mean KPI result of the service-level test over an extended period of time to gauge the mean behavior of this test under typical loads.

The features attribution graph in Figure 9B shows the model mappings determined by model interpretation of the telemetry input elements, for both positive and negative associations with the KPI. This example shows the importances of a subset of input elements over the same period represented in 9A. While this series showcases the input element contributions independently, contributions can also be stacked and summing the contributions of all input elements will provide the model predictions for the KPI, which is made possible by the additive explanation property of SHAP. To stack visually, contributions values can be sorted in order of contribution and contribution is displayed as the difference between subsequent input element contribution points on the graph. In the bottom graph, the y-axis shows percent changes relative to the expected value (i.e., mean) for the service KPI. Other visualizations of service KPIs and underlying telemetry input elements over time may also be explored.

At time 12:40 the example of Figure 9B sufficient degradation of the KPI is observed, which is represented by a vertical dashed line. This degradation triggers an analysis using the interpretation of the model by relevant layer. This event highlights a single timepoint, but the event can also extend to a range of timepoints.

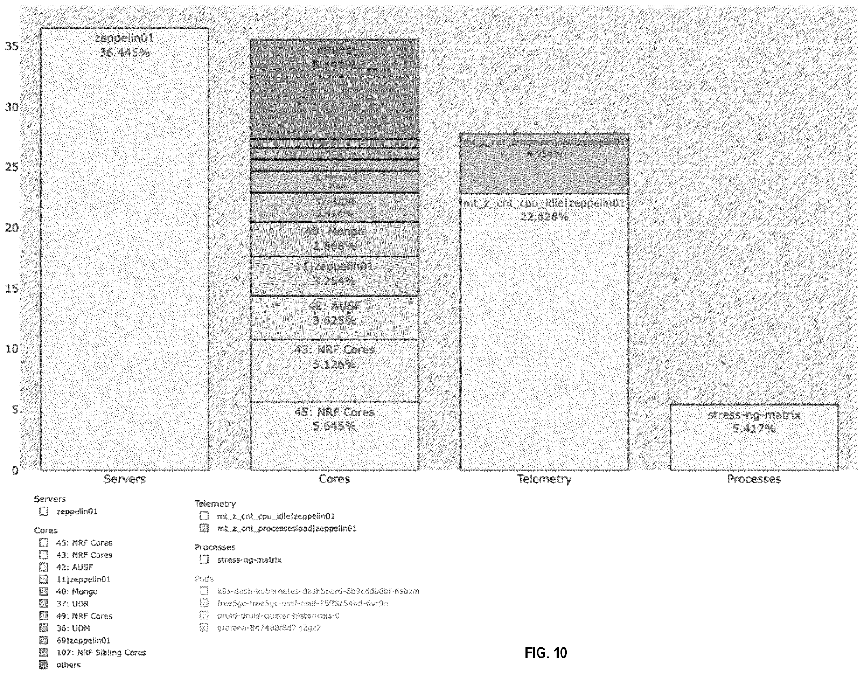

Figure 10 shows a stacked bar-graph of the relative importances are displayed within layers when filtering and adding the contributions of each input element. Note, the division of layers may vary by use-case and the particular layers below do not correspond perfectly with the layers described when introducing the layers of a telecommunication system, but, instead, are meaningful groupings that are helpful in localizing the problem. SHapley Additive Explanations (SHAP) are being used in this case, so the input elements within any given layer can be summed to give an indication of the model reliance on a particular layer for the prediction. For example, the virtualization layer Pods does not contain information the model relies on to make a prediction one way or another, so the Pods layer is not associated with the degradation in this case. While a similar argument can be made for processes as a layer, the single process "stress-ng-matrix" is associated with a lowered connection time of 5.417% relative to the mean connection time. Because the "stress-ng-matrix" process was used to generate stress on pinned CPUs of a sibling core, noisy-neighbor use-case, the model interpretation correctly assigned its importance in causing the problem.

Figure 10 also demonstrates how filters can then be applied to focus on the most pertinent input elements in each layer. For example, focusing on those input elements associated with worsening the observed performance characteristic (i.e., KPI), in this case increasing the connection time, isolating the view to the to layer input elements associated with higher connection times provides the most relevant information to explain a problem during the event. Strategies to reduce the number of input elements within layers can be used, such as applying a Pareto filter applied in Figure 10 to limit the explanation to 80% of the degradation using the top offenders in a particular layer and only using at most 20% of the available input elements. , further further reducing the number of input elements displayed. Finally, additional strategies to remove layers with little predictive value can be used, such as minimum contribution fractions of the layer in aggregate or input elements in the layer relative to other layers.

### Using groundtruth feedback to provide confidence bounds for model error

SHAP attributes establish relative importances of each input element in their contribution to predictions for performance characteristics values made by the model. A goal of the fault analysis system described above is to evaluate samples subject to a fault, assessing the features and feature-value pairs most associated with problems in the sample. This sample is commonly framed or thought of as a question (e.g., given a particular region and data CDRs, what explains the poor average throughput observed?), where the answer can be better characterized by a model with a representation of a wider area of the telecommunication network.

However, models that sufficiently complex with regard to real-world data are generally not perfect. As such, in making predictions there will tend to be a difference (i.e., error) between the model predicted value and actual value of a target for any given example. The average error on a set of examples might be taken to represent the quality of the model in representing the relationships between the inputs and target variable for these data.

The described fault analysis strategy uses SHAP to understand data in a sample believed to have an underlying fault, which is unlike some other applications of SHAP which aim primarily to understand the model. When a SHAP explainer is used to evaluate an individual case, a SHAP value is typically given to represent the relative importance of each feature-value pair in the prediction made by the model. This can sometimes lead to some ambiguity in the approach: if model error is high, SHAP values will be divided between the features summing together to the predicted value which will be quite different than the actual value.

Thus, by summarizing the SHAP values to represent a sample, the resulting feature or feature-value pair contributions may be misleading if the errors in individual cases is not accounted for in some way. For instance, a systematic error for a subset of cases may lead to the over or under representation of the importance of a specific feature. Providing visibility to this error may be helpful in providing confidence bounds for the contributions of individual features

To address this problem, a feature importance confidence level may be established based on a prediction error distributed across SHAP importances. Confidence intervals are often used to represent a range of possible deviation from the expected outcome. In this case, however, a determination is being made of *confidence for the SHAP result* of any given feature based on the error of the overall prediction.

Because the prediction error for the target variable can be known, but whether this error just represents noise in the measurements or contributions from unknown variables may now be known, a reasonable assumption is that the error is evenly distributed across the features by their SHAP magnitude. There is an implicit assumption in such a confidence level assignment, however, that the relationship between the inputs as determined by the model and SHAP is correct. In the absence of a confidence boundary this implicit assumption may also be reasonable.

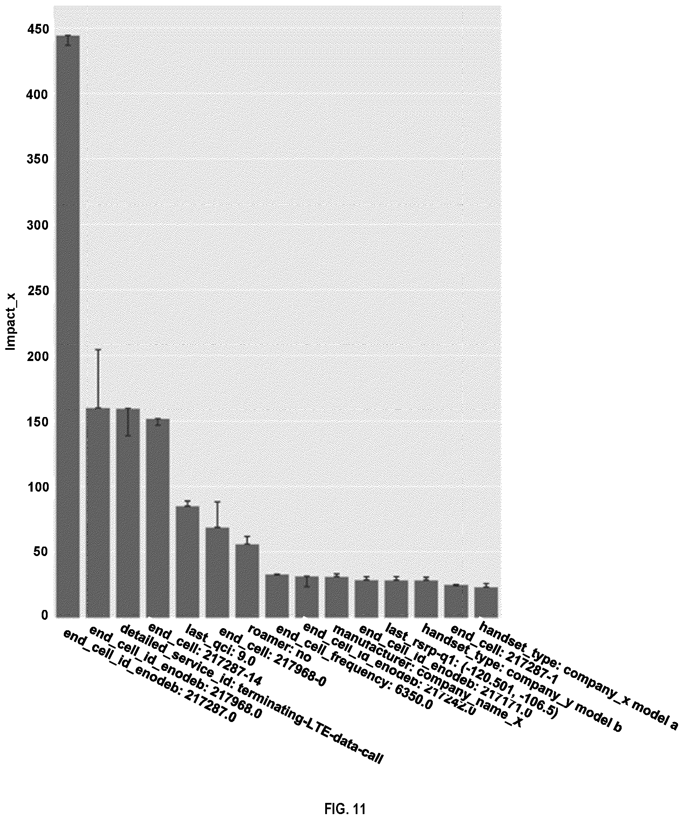

Figure 11 depicts an example of "impact_x" value, which represents the impact for the input elementas measured by severity × fraction of affected cases in the sample. What appears as error-bars in Figure 11 represents confidence bounds for the importance of these input elements based on feedback from the error produced by the model in predicting the particular cases in the sample. A interpretation of the bar graph in Figure 11 may be as follows:
Cases with the "end_cell_id_enodeb: 217968.0" are examples where the model prediction is systematically higher than might otherwise have been expected (e.g., cases with that input element are worse than the model thought they would be).

Cases with input element"detailed_service_id: terminating-LTE-data-call" are examples where the model predictions are systematically lower than might otherwise have been expected (e.g., cases with that characteristic are better than the model thought they would be).

Cases with input element "end_cell_frequency: 6350.0" were examples where the model predictions are higher or lower (or there was no prediction error) so that there is no systematic error, and noise might reasonably be explained by unseen variables.

Non-liming examples of implementation for these confidence bounds could include a linear based feedback, where prediction error is distributed evenly between the feature used in the prediction. Alternatively, another possibility would be to scale the feature importance down or up depending on an overprediction or underprediction, respectively. Ultimately, these strategies uncover divergences between the local model and the ground truth target values observed in the sample being analyzed and, thus, provide a good feedback signal when the model is consistently making incorrect predictions in the presence of certain features.

### Broader system analysis

While the focus of this invention is primarily on the analysis of faults and system degradation, isolating periods of above average system performance could also be used to discover protective network characteristics to inform system remediation strategies.

### Example Operations

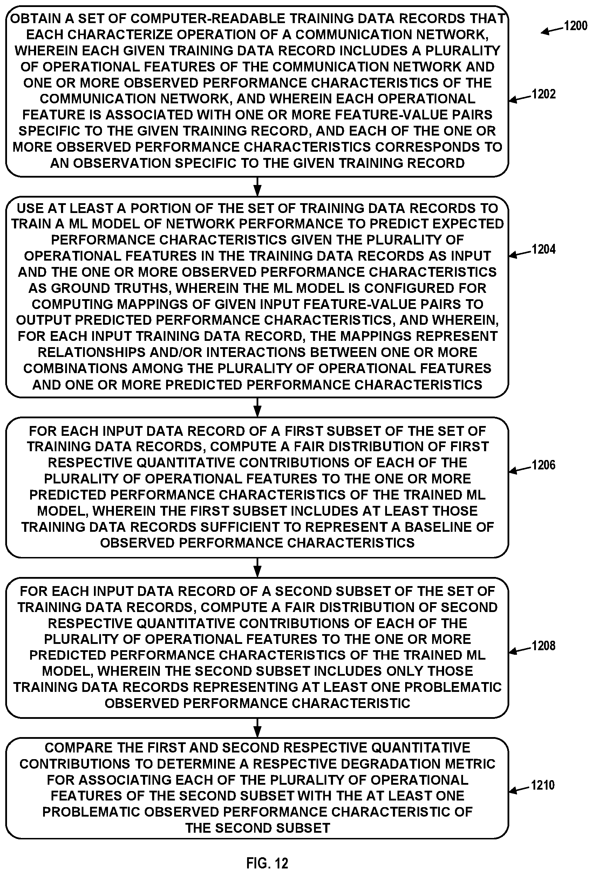

Figure 12 is a flow chart illustrating an example embodiment of a method 1200. The method illustrated by Figure 12 may be carried out by a computing device, such as computing device 200 or server cluster 304, for example. However, the process can be carried out by other types of devices or device subsystems. For example, the process could be carried out by a portable computer, such as a laptop or a tablet device.

The embodiments of Figure 12 may be simplified by the removal of any one or more of the features shown therein. Further, these embodiments may be combined with features, aspects, and/or implementations of any of the previous figures or otherwise described herein.

The example method 1200 may also be embodied as instructions executable by one or more processors of the one or more server devices of the system or virtual machine or container. For example, the instructions may take the form of software and/or hardware and/or firmware instructions. In an example embodiment, the instructions may be stored on a non-transitory computer readable medium. When executed by one or more processors of the one or more servers, the instructions may cause the one or more servers to carry out various operations of the example method.

Block 1202 of example method 1200 may involve obtaining a set of computer-readable training data records that each characterize operation of a communication network. Each given training data record may include a plurality of operational features of the communication network and one or more observed performance characteristics of the communication network. Further, each operational feature may be associated with one or more feature-value pairs specific to the given training record, and each of the one or more observed performance characteristics corresponds to an observation specific to the given training record.

Block 1204 of example method 1200 may involve using at least a portion of the set of training data records to train a machine learning (ML) model of network performance to predict expected performance characteristics given the plurality of operational features in the training data records as input and the one or more observed performance characteristics as ground truths. The ML model may be configured for computing mappings of given input feature-value pairs to output predicted performance characteristics. Additionally, for each input training data record, the mappings may represent relationships and/or interactions between one or more combinations among the plurality of operational features and one or more predicted performance characteristics.

Block 1206 of example method 1200 may involve, for each input data record of a first subset of the set of training data records, computing a fair distribution of first respective quantitative contributions of each of the plurality of operational features to the one or more predicted performance characteristics of the trained ML model. The first subset may include at least those training data records sufficient to represent a baseline of observed performance characteristics.

Block 1208 of example method 1200 may involve, for each input data record of a second subset of the set of training data records, computing a fair distribution of second respective quantitative contributions of each of the plurality of operational features to the one or more predicted performance characteristics of the trained ML model. The second subset may include only those training data records representing at least one problematic observed performance characteristic. In accordance with example embodiments, each training record in the second subset does not necessarily have to include a problematic observered performance characteristic in order to "represent" at least one problematic observed performance characteristic. Rather each training record in the second subset may include one or more operational feature, for example, that associate the record in some way with a observered problematic performance characteristic. For example, a given record may be associated with a base station or cell that had low average throughput (observered problematic performance characteristic), but the given record itself may not necessarily be associated resulting performance degradation. However, other records may be associated with both the problematic base station or cell as well as the degraded performance.

Finally, block 1210 of example method 1200 may involve comparing the first and second respective quantitative contributions to determine a respective degradation metric for associating each of the plurality of operational features of the second subset with the at least one problematic observed performance characteristic of the second subset.

In some embodiments, block 1206 may be omitted, such that the fair distributions computed at block 1208 may be used to directly evaluate the degradation metrics, without necessarily comparing to a baseline.

In accordance with example embodiments, computing the fair distribution for each input data record of the first subset of the set of training data records may involve computing respective first Shapley Additive Explanations (SHAP) values for each of the plurality of operational features in each input data record of the first subset. Each given SHAP value may indicate a quantitative contribution of a given operational feature to a given predicted performance characteristic. With this arrangement, computing the fair distribution of second respective quantitative contributions for each input data record of the second subset of the set of training data records may involve computing respective second SHAP values for each of the plurality of operational features in each input data record of the second subset.

In accordance with example embodiments, comparing the first and second respective quantitative contributions to determine the respective degradation metric for associating each of the plurality of operational features of the second subset with the at least one problematic observed performance characteristic may involve, for each respective operational feature of the second subset, computing a respective severity metric based on the second respective aggregation of SHAP values across the second subset for the respective operational feature. Then, for each respective operational feature of the second subset, the respective severity metric may be scaled by a fraction of the total number of data records in the second subset having feature-value pairs associated with the respective operational feature.

In accordance with example embodiments, comparing the first and second respective quantitative contributions to determine the respective degradation metric for associating each of the plurality of operational features of the second subset with the at least one problematic observed performance characteristic may involve, for each respective operational feature of the first subset, computing a respective first statistical distribution of respective first SHAP values across the first subset, and for each respective operational feature of the second subset, computing a respective second statistical distribution of respective second SHAP values across the second subset. Then, for each respective operational feature in common in both the first and second subsets, the respective second statistical distribution and the respective first statistical distribution may be compared.

In accordance with example embodiments, the example method may further entail determining respective clusters of operational features within records of the second subset, determining a respective frequency among the records of each respective cluster, and identifying respective operational clusters as all respective clusters having respective frequencies above a threshold. Next, for each respective operational cluster of the second subset, a respective severity metric may be computed based on the second respective aggregation of SHAP values for operational features that are part of the respective operational cluster across the second subset. Then, for each respective operational feature of the second subset, the respective severity metric may be scaled by a fraction of the total number of training data records in the second subset having the exact combinations of feature-value pairs associated with the respective operational cluster.

In accordance with example embodiments, the example method may further entail identifying respective operational events of the second subset as time windows during which a performance characteristic is observed as being problematic. With this arrangement, comparing the first and second respective quantitative contributions may involve, for each respective operational event of the second subset, computing a respective severity metric for each respective operational feature based on the second respective aggregation of SHAP values across the second subset during the respective operational event. Then, for each respective operational feature of the second subset, the respective severity metric may be scaled by the total number of timepoints of the respective operational event.

In accordance with example embodiments, the example method may further entail identifying problematic case baselines according to the determined respective degradation metrics of specific operational features of the second subset as measured by their association with one or more observed performance characteristics. Templates of operational features may then be created according to at least one of: (i) a magnitude of the measured associations of operational features with the one or more observed performance characteristics, or (ii) a relative magnitude of the measured associations between operational features with respect to one or more observed performance characteristics, or (iii) the positive or negative relationship of the measured associations of operational features with the one or more observed performance characteristics. Templates may be compared to categorize problematic performance.

In accordance with example embodiments, the example method may further entail computing a model prediction error in the second subset and using the prediction error to adjust an attributed importance of respective operational features, and then qualifying an accuracy of representation based on computed model prediction errors.

In accordance with example embodiments, comparing the first and second respective quantitative contributions to determine the respective degradation metric may involve generating a visualization of a comparison of the second respective quantitative contributions to a baseline corresponding to the first respective quantitative contributions. The visualization may be a digital display presented on a display device, or a printed graphic produced by a printing device.

In accordance with example embodiments, the communication network may be a telecommunications network and/or or a data communications network. In this arrangement, each training data record may include a communication history record, the communication history record being at least one of a call detail record, or a session detail record, and the plurality of operational features may include a base station ID, cell ID, sector ID, radio frequency, PLMN ID, signal-to-noise ratio, call quality, radio access technology, user terminal device type, geographical coordinates, and/or user terminal device manufacturer. In addition, the observed performance characteristics include one or more observed instances of defined performance characteristics in a performance list consisting of at least one of: call completion status, dropped call status, blocked call status, data throughput rate, or call quality.

In accordance with example embodiments, in accordance with example embodiments, the communication network may be a telecommunications network and/or a data communications network. Further, each training data record may include a communication history record or system telemetry from one or more network layers of the communication network, where the one or more network layers are a 5G Core, a RAN, a User Plane, a Control Plan, a virtualization layer, and/or a physical infrastructure layer, of the communication network. With this arrangement, the example method may further involve monitoring one or more performance characteristics observed during runtime operations of the communication network, and then localizing a fault to the operational features of one or more communication network layers.

### Conclusion

The above detailed description describes various features and operations of the disclosed systems, devices, and methods with reference to the accompanying figures..

With respect to any or all of the message flow diagrams, scenarios, and flow charts in the figures and as discussed herein, each step, block, and/or communication can represent a processing of information and/or a transmission of information in accordance with example embodiments.

A step or block that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical operations or actions in the method or technique. The program code and/or related data can be stored on any type of computer readable medium such as a storage device including RAM, a disk drive, a solid state drive, or another storage medium.

The computer readable medium can also include non-transitory computer readable media such as computer readable media that store data for short periods of time like register memory and processor cache. The computer readable media can further include non-transitory computer readable media that store program code and/or data for longer periods of time. Thus, the computer readable media may include secondary or persistent long term storage, like ROM, optical or magnetic disks, solid state drives, compact-disc read only memory (CD-ROM), for example. The computer readable media can also be any other volatile or non-volatile storage systems. A computer readable medium can be considered a computer readable storage medium, for example, or a tangible storage device.

Moreover, a step or block that represents one or more information transmissions can correspond to information transmissions between software and/or hardware modules in the same physical device. However, other information transmissions can be between software modules and/or hardware modules in different physical devices.

## Claims

1. A computer-implemented method (1200) comprising:
obtaining (1202) a set of computer-readable training data records that each characterize operation of a communication network, wherein each given training data record includes a plurality of operational features of the communication network and one or more observed performance characteristics of the communication network, and wherein each operational feature is associated with one or more feature-value pairs specific to the given training record, and each of the one or more observed performance characteristics corresponds to an observation specific to the given training record;
using (1204) at least a portion of the set of training data records to train a machine learning, ML, model of network performance to predict expected performance characteristics given the plurality of operational features in the training data records as input and the one or more observed performance characteristics as ground truths, wherein the ML model is configured for computing mappings of given input feature-value pairs to output predicted performance characteristics, and wherein, for each input training data record, the mappings represent relationships and/or interactions between one or more combinations among the plurality of operational features and one or more predicted performance characteristics;
for each input data record of a first subset of the set of training data records, computing (1206) a first fair distribution of first respective quantitative contributions of each of the plurality of operational features to the one or more predicted performance characteristics of the trained ML model applied to the first subset, wherein, for each given predicted performance characteristic, a sum of the first respective quantitative contributions in the first fair distribution equals a difference between the given predicted performance characteristic and a mean of predictions by the ML model for all training data records of the set, and, wherein the first subset comprises a control sample of training data records that include observed performance characteristics representing a baseline of normal performance of the communication network;
for each input data record of a second subset of the set of training data records, computing (1208) a second fair distribution of second respective quantitative contributions of each of the plurality of operational features to the one or more predicted performance characteristics of the trained ML model applied to the second subset, wherein, for each given predicted performance characteristic, a sum of the second respective quantitative contributions in the second fair distribution equals the difference between the given predicted performance characteristic and the mean of predictions by the ML model for all training data records of the set, and wherein the second subset comprises only those training data records that include at least one problematic observed performance characteristic representing at least one aspect of abnormal performance of the communication network; and
comparing (1210) the first and second respective quantitative contributions to determine a respective degradation metric for associating each of the plurality of operational features of the second subset with the at least one problematic observed performance characteristic of the second subset.

2. The computer-implemented method of claim 1, wherein, for each input data record of the first subset of the set of training data records, computing the fair distribution of the first respective quantitative contributions of each of the plurality of operational features to the one or more predicted performance characteristics of the trained ML model comprises:
computing respective first Shapley Additive Explanations, SHAP, values for each of the plurality of operational features in each input data record of the first subset, wherein each given SHAP value indicates a quantitative contribution of a given operational feature to a given predicted performance characteristic,
wherein, for each input data record of the second subset of the set of training data records, computing the second fair distribution of second respective quantitative contributions of each of the plurality of operational features to the one or more predicted performance characteristics of the trained ML model comprises:
computing respective second SHAP values for each of the plurality of operational features in each input data record of the second subset.

3. The computer-implemented method of claim 2, wherein comparing the first and second respective quantitative contributions to determine the respective degradation metric for associating each of the plurality of operational features of the second subset with the at least one problematic observed performance characteristic comprises:
for each respective operational feature of the second subset, computing a respective severity metric based on the second respective aggregation of SHAP values across the second subset of the respective operational feature; and
for each respective operational feature of the second subset, scaling the respective severity metric by a fraction of the total number of data records in the second subset having feature-value pairs associated with the respective operational feature.

4. The computer-implemented method of claim 2, wherein comparing the first and second respective quantitative contributions to determine the respective degradation metric for associating each of the plurality of operational features of the second subset with the at least one problematic observed performance characteristic comprises:
for each respective operational feature of the first subset, computing a respective first statistical distribution of respective first SHAP values across the first subset;
for each respective operational feature of the second subset, computing a respective second statistical distribution of respective second SHAP values across the second subset; and
for each respective operational feature in common in both the first and second subsets, comparing the respective second statistical distribution with the respective first statistical distribution.

5. The method of claim 2, further comprising:
determining respective clusters of operational features within records of the second subset;
determining a respective frequency among the records of each respective cluster;
identifying respective operational clusters as all respective clusters having respective frequencies above a threshold;
for each respective operational cluster of the second subset, computing a respective severity metric based on the second respective aggregation of SHAP values across the second subset for operational features of the respective operational cluster; and
for each respective operational feature of the second subset, scaling the respective severity metric by a fraction of the total number of training data records in the second subset having the feature-value pair combinations associated with the respective operational cluster.

6. The method of claim 2, further comprising identifying respective operational events of the second subset as time windows during which a performance characteristic is observed as being problematic,
and wherein comparing the first and second respective quantitative contributions comprises:
for each respective operational event of the second subset, computing a respective severity metric for each respective operational feature based on the second respective aggregation of SHAP values across the second subset during the respective operational event; and
for each respective operational feature of the second subset, scaling the respective severity metric by the total number of timepoints of the respective operational event.

7. The method of claim 1, further comprising:
identifying problematic case baselines according to the determined respective degradation metrics of specific operational features of the second subset as measured by their association with one or more observed performance characteristics;
creating templates of operational features according to at least one of: (i) a magnitude of the measured associations of operational features with the one or more observed performance characteristics, or (ii) a relative magnitude of the measured associations between operational features with the one or more observed performance characteristics, or (iii) the positive or negative relationship of the measured associations of operational features with the one or more observed performance characteristics; and
categorizing problematic performance by comparing the templates.

8. The method of claim 2, further comprising:
computing a model prediction error in the second subset and using the prediction error to adjust an attributed importance of respective operational features; and
qualifying an accuracy of representation based on computed model prediction error.

9. A system comprising:
one or more processors; and
memory configured for storing instructions that, when executed by the one or more processors, cause the system to carry out operations including:
obtaining (1202) a set of computer-readable training data records that each characterize operation of a communication network, wherein each given training data record includes a plurality of operational features of the communication network and one or more observed performance characteristics of the communication network, and wherein each operational feature is associated with one or more feature-value pairs specific to the given training record, and each of the one or more observed performance characteristics corresponds to an observation specific to the given training record;
using (1204) at least a portion of the set of training data records to train a machine learning, ML, model of network performance to predict expected performance characteristics given the plurality of operational features in the training data records as input and the one or more observed performance characteristics as ground truths, wherein the ML model is configured for computing mappings of given input feature-value pairs to output predicted performance characteristics, and wherein, for each input training data record, the mappings represent relationships and/or interactions between one or more combinations among the plurality of operational features and one or more predicted performance characteristics;
for each input data record of a first subset of the set of training data records, computing (1206) a first fair distribution of first respective quantitative contributions of each of the plurality of operational features to the one or more predicted performance characteristics of the trained ML model applied to the first subset, wherein, for each given predicted performance characteristic, a sum of the first respective quantitative contributions in the first fair distribution equals a difference between the given predicted performance characteristic and a mean of predictions by the ML model for all training data records of the set, and wherein the first subset comprises a control sample of training data records that include observed performance characteristics representing a baseline of normal performance of the communication network;
for each input data record of a second subset of the set of training data records, computing (1208) a second fair distribution of second respective quantitative contributions of each of the plurality of operational features to the one or more predicted performance characteristics of the trained ML model applied to the second subset, wherein, for each given predicted performance characteristic, a sum of the second respective quantitative contributions in the second fair distribution equals the difference between the given predicted performance characteristic and the mean of predictions by the ML model for all training data records of the set, and wherein the second subset compirses only those training data records that include at least one problematic observed performance characteristic representing at least one aspect of abnormal performance of the communication network; and
comparing (1210) the first and second respective quantitative contributions to determine a respective degradation metric for associating each of the plurality of operational features of the second subset with the at least one problematic observed performance characteristic of the second subset.

10. The system of claim 9, wherein, for each input data record of the first subset of the set of training data records, computing the fair distribution of the first respective quantitative contributions of each of the plurality of operational features to the one or more predicted performance characteristics of the trained ML model comprises:
computing respective first Shapley Additive Explanations, SHAP, values for each of the plurality of operational features in each input data record of the first subset, wherein each given SHAP value indicates a quantitative contribution of a given operational feature to a given predicted performance characteristic,
wherein, for each input data record of the second subset of the set of training data records, computing the second fair distribution of second respective quantitative contributions of each of the plurality of operational features to the one or more predicted performance characteristics of the trained ML model comprises:
computing respective second SHAP values for each of the plurality of operational features in each input data record of the second subset;
wherein comparing the first and second respective quantitative contributions to determine the respective degradation metric for associating each of the plurality of operational features of the second subset with the at least one problematic observed performance characteristic comprises:
for each respective operational feature of the second subset, computing a respective severity metric based on the second respective SHAP values across the second subset for operational features of the respective operational feature; and
for each respective operational feature of the second subset, scaling the respective severity metric by a fraction of the total number of training data records in the second subset having feature-value pairs associated with the respective operational feature.

11. The system of claim 9, wherein, for each input data record of the first subset of the set of training data records, computing the first fair distribution of the first respective quantitative contributions of each of the plurality of operational features to the one or more predicted performance characteristics of the trained ML model comprises:
computing respective first Shapley Additive Explanations, SHAP, values for each of the plurality of operational features in each input data record of the first subset, wherein each given SHAP value indicates a quantitative contribution of a given operational feature to a given predicted performance characteristic,
wherein, for each input data record of the second subset of the set of training data records, computing the second fair distribution of second respective quantitative contributions of each of the plurality of operational features to the one or more predicted performance characteristics of the trained ML model comprises:
computing respective second SHAP values for each of the plurality of operational features in each input data record of the second subset;
wherein comparing the first and second respective quantitative contributions to determine the respective degradation metric for associating each of the plurality of operational features of the second subset with the at least one problematic observed performance characteristic comprises:
for each respective operational feature of the first subset, computing a respective first statistical distribution of respective first SHAP values across the first subset;
for each respective operational feature of the second subset, computing a respective second statistical distribution of respective second SHAP values across the second subset; and
for each respective operational feature in common in both the first and second subsets, comparing the respective second statistical distribution with the respective first statistical distribution.

12. The system of claim 9, wherein comparing the first and second respective quantitative contributions to determine the respective degradation metric for associating each of the plurality of operational features of the second subset with the at least one problematic observed performance characteristic comprises:
generating a visualization of a comparison of the second respective quantitative contributions to a baseline corresponding to the first respective quantitative contributions,
wherein the visualization is at least one of a digital display presented on a display device, or a printed graphic produced by a printing device.

13. The system of claim 9, wherein the communication network is at least one of a telecommunications network, or a data communications network,
wherein each training data record comprises a communication history record, the communication history record being at least one of a call detail record, or a session detail record,
wherein the plurality of operational features comprises a feature list consisting of at least one of: base station identification, ID, cell ID, sector ID, radio frequency, public land mobile network, PLMN, ID, signal-to-noise ratio, call quality, geographical coordinates, radio access technology, user terminal device type, or user terminal device manufacturer,
and wherein the observed performance characteristics comprise one or more observed instances of defined performance characteristics in a performance list consisting of at least one of: call completion status, dropped call status, blocked call status, data throughput rate, or call quality.

14. The system of claim 9, wherein the communication network is at least one of a telecommunications network, or a data communications network,
wherein each training data record comprises a communication history record or system telemetry from one or more network layers of the communication network, the one or more network layers being at least one of: a fifth generation, 5G, Core, a radio access network, RAN, a User Plane, a Control Plan, a virtualization layer, or a physical infrastructure layer, of the communication network,
and wherein the operations further include:
monitoring one or more performance characteristics observed during runtime operations of the communication network; and
localizing a fault to the operational features of one or more network layers.

15. An article of manufacture including a non-transitory computer-readable medium, having stored thereon program instructions that, when executed by one more processors of a system, cause the system to carry out operations including:
obtaining (1202) a set of computer-readable training data records that each characterize operation of a communication network, wherein each given training data record includes a plurality of operational features of the communication network and one or more observed performance characteristics of the communication network, and wherein each operational feature is associated with one or more feature-value pairs specific to the given training record, and each of the one or more observed performance characteristics corresponds to an observation specific to the given training record;
using (1204) at least a portion of the set of training data records to train a machine learning, ML, model of network performance to predict expected performance characteristics given the plurality of operational features in the training data records as input and the one or more observed performance characteristics as ground truths, wherein the ML model is configured for computing mappings of given input feature-value pairs to output predicted performance characteristics, and wherein, for each input training data record, the mappings represent relationships and/or interactions between one or more combinations among the plurality of operational features and one or more predicted performance characteristics;
for each input data record of a first subset of the set of training data records, computing (1206) a first fair distribution of first respective quantitative contributions of each of the plurality of operational features to the one or more predicted performance characteristics of the trained ML model applied to the first subset, wherein, for each given predicted performance characteristic, a sum of the first respective quantitative contributions in the first fair distribution equals a difference between the given predicted performance characteristic and a mean of predictions by the ML model for all training data records of the set, and wherein the first subset a control sample of training data records that include observed performance characteristics representing a baseline of normal performance of the communication network;
for each input data record of a second subset of the set of training data records, computing (1208) a second fair distribution of second respective quantitative contributions of each of the plurality of operational features to the one or more predicted performance characteristics of the trained ML model applied to the second subset, wherein, for each given predicted performance characteristic, a sum of the second respective quantitative contributions in the second fair distribution equals the difference between the given predicted performance characteristic and the mean of predictions by the ML model for all training data records of the set, and wherein the second subset comprises only those training data records that include at least one problematic observed performance characteristic representing at least one aspect of abnormal performance of the communication network; and
comparing (1210) the first and second respective quantitative contributions to determine a respective degradation metric for associating each of the plurality of operational features of the second subset with the at least one problematic observed performance characteristic of the second subset.

## Patentansprüche

1. Computerimplementiertes Verfahren (1200), umfassend:
Erhalten (1202) eines Satzes von computerlesbaren Trainingsdatenaufzeichnungen, die jeweils Betrieb eines Kommunikationsnetzes kennzeichnen, wobei jede gegebene Trainingsdatenaufzeichnung eine Vielzahl von Betriebsmerkmalen des Kommunikationsnetzes und ein oder mehrere beobachtete Leistungseigenschaften des Kommunikationsnetzes beinhaltet, und wobei jedes Betriebsmerkmal mit einem oder mehreren Merkmal-Wert-Paaren assoziiert ist, die spezifisch für die gegebene Trainingsdatenaufzeichnung sind, und jede von der einen oder den mehreren beobachteten Leistungseigenschaften einer Beobachtung entspricht, die spezifisch für die gegebene Trainingsaufzeichnung ist;
Verwenden (1204) von zumindest einem Teil aus dem Satz von Trainingsdatenaufzeichnungen, um ein maschinelles Lern-, ML-Modell von Netzleistung zu trainieren, um erwartete Leistungseigenschaften vorherzusagen, wenn die Vielzahl von Betriebsmerkmalen in den Trainingsdatenaufzeichnungen als Eingabe und die eine oder mehreren beobachteten Leistungseigenschaften als Grundwahrheiten gegeben sind, wobei das ML-Modell zum Berechnen von Zuordnungen von gegebenen eingegebenen Merkmal-Wert-Paaren konfiguriert ist, um vorhergesagte Leistungseigenschaften auszugeben, und wobei für jede eingegebene Trainingsdatenaufzeichnung die Zuordnungen Beziehungen und/oder Interaktionen zwischen einer oder mehreren Kombinationen aus der Vielzahl von Betriebsmerkmalen und einer oder mehreren vorhergesagten Leistungseigenschaften darstellen;
für jede eingegebene Datenaufzeichnung eines ersten Teilsatzes aus dem Satz von Trainingsdatenaufzeichnungen Berechnen (1206) einer ersten fairen Verteilung von ersten jeweiligen quantitativen Beiträgen von jedem aus der Vielzahl von Betriebsmerkmalen zu der einen oder den mehreren vorhergesagten Leistungseigenschaften des trainierten ML-Modells, das auf den ersten Teilsatz angewendet wird, wobei für jede gegebene vorhergesagte Leistungseigenschaft eine Summe der ersten jeweiligen quantitativen Beiträge in der ersten fairen Verteilung einer Differenz zwischen der gegebenen vorhergesagten Leistungseigenschaft und einem Mittel von Vorhersagen durch das ML-Modell für alle Trainingsdatenaufzeichnungen aus dem Satz gleicht, und wobei der erste Teilsatz eine Steuerprobe von Trainingsdatenaufzeichnungen umfasst, die beobachtete Leistungseigenschaften beinhalten, die eine Basislinie von normaler Leistung des Kommunikationsnetzes darstellen;
für jede eingegebene Trainingsdatenaufzeichnung eines zweiten Teilsatzes aus dem Satz von Trainingsdatenaufzeichnungen Berechnen (1208) einer zweiten fairen Verteilung von zweiten jeweiligen quantitativen Beiträgen von jedem aus der Vielzahl von Betriebsmerkmalen zu der einen oder den mehreren vorhergesagten Leistungseigenschaften des trainierten ML-Modells, das auf den zweiten Teilsatz angewendet wird, wobei für jede gegebene vorhergesagte Leistungseigenschaft eine Summe der zweiten jeweiligen quantitativen Beiträge in der zweiten fairen Verteilung der Differenz zwischen der gegebenen vorhergesagten Leistungseigenschaft und dem Mittel von Vorhersagen durch das ML-Modell für alle Trainingsdatenaufzeichnungen aus dem Satz gleicht, und wobei der zweite Teilsatz nur diejenigen Trainingsdatenaufzeichnungen umfasst, die zumindest eine problematische beobachtete Leistungseigenschaft beinhalten, die zumindest einen Aspekt von abnormaler Leistung des Kommunikationsnetzes darstellt; und
Vergleichen (1210) der ersten und zweiten jeweiligen quantitativen Beiträge, um eine jeweilige Degradationsmetrik zum Assoziieren von jedem aus der Vielzahl von Betriebsmerkmalen des zweiten Teilsatzes mit der zumindest einen problematischen beobachteten Leistungseigenschaft des zweiten Teilsatzes zu bestimmen.

2. Computerimplementiertes Verfahren nach Anspruch 1, wobei für jede eingegebene Datenaufzeichnung des ersten Teilsatzes aus dem Satz von Trainingsdatenaufzeichnungen das Berechnen der fairen Verteilung der ersten jeweiligen quantitativen Beiträge von jedem aus der Vielzahl von Betriebsmerkmalen zu der einen oder den mehreren vorhergesagten Leistungseigenschafen des trainierten ML-Modells Folgendes umfasst:
Berechnen von jeweiligen ersten Shapley-Additive-Explanations-, SHAP-Werten für jedes aus der Vielzahl von Betriebsmerkmalen in jeder eingegebenen Datenaufzeichnung des ersten Teilsatzes, wobei jeder gegebene SHAP-Wert einen quantitativen Beitrag eines gegebenen Betriebsmerkmals zu einer gegebenen vorhergesagten Leistungseigenschaft angibt,
wobei, für jede eingegebene Datenaufzeichnung des zweiten Teilsatzes aus dem Satz von Trainingsdatenaufzeichnungen, das Berechnen der zweiten fairen Verteilung von zweiten jeweiligen quantitativen Beiträgen von jedem aus der Vielzahl von Betriebsmerkmalen zu der einen oder den mehreren vorhergesagten Leistungseigenschaften des trainierten ML-Modells Folgendes umfasst:
Berechnen von jeweiligen zweiten SHAP-Werten für jedes aus der Vielzahl von Betriebsmerkmalen in jeder eingegebenen Datenaufzeichnung des zweiten Teilsatzes.

3. Computerimplementiertes Verfahren nach Anspruch 2, wobei das Vergleichen der ersten und zweiten jeweiligen quantitativen Beiträge, um die jeweilige Degradationsmetrik zum Assoziieren von jedem aus der Vielzahl von Betriebsmerkmalen des zweiten Teilsatzes mit der zumindest einen problematischen beobachteten Leistungseigenschaft zu bestimmen, Folgendes umfasst:
für jedes jeweilige Betriebsmerkmal des zweiten Teilsatzes Berechnen einer jeweiligen Schweremetrik basierend auf der zweiten jeweiligen Aggregation von SHAP-Werten über den zweiten Teilsatz des jeweiligen Betriebsmerkmals; und
für jedes jeweilige Betriebsmerkmal des zweiten Teilsatzes Skalieren der jeweiligen Schweremetrik mit einem Bruchteil der Gesamtanzahl an Datenaufzeichnungen in dem zweiten Teilsatz mit Merkmal-Wert-Paaren, die mit dem jeweiligen Betriebsmerkmal assoziiert sind.

4. Computerimplementiertes Verfahren nach Anspruch 2, wobei das Vergleichen der ersten und zweiten jeweiligen quantitativen Beiträge, um die jeweilige Degradationsmetrik zum Assoziieren von jedem aus der Vielzahl von Betriebsmerkmalen des zweiten Teilsatzes mit der zumindest einen problematischen beobachteten Leistungseigenschaft zu bestimmen, Folgendes umfasst:
für jedes jeweilige Betriebsmerkmal des ersten Teilsatzes Berechnen einer jeweiligen ersten statistischen Verteilung von jeweiligen ersten SHAP-Werten über den ersten Teilsatz;
für jedes jeweilige Betriebsmerkmal des zweiten Teilsatzes Berechnen einer jeweiligen zweiten statistischen Verteilung von jeweiligen zweiten SHAP-Werten über den zweiten Teilsatz; und
für jedes jeweilige gemeinsame Betriebsmerkmal sowohl des ersten als auch des zweiten Teilsatzes Vergleichen der jeweiligen zweiten statistischen Verteilung mit der jeweiligen ersten statistischen Verteilung.

5. Verfahren nach Anspruch 2, ferner umfassend:
Bestimmen von jeweiligen Clustern von Betriebsmerkmalen innerhalb von Aufzeichnungen des zweiten Teilsatzes;
Bestimmen einer jeweiligen Häufigkeit unter den Aufzeichnungen jedes jeweiligen Clusters;
Identifizieren von jeweiligen Betriebsclustern als alle jeweiligen Cluster mit jeweiligen Häufigkeiten über einem Schwellenwert;
für jeden jeweiligen Betriebscluster des zweiten Teilsatzes Berechnen einer jeweiligen Schweremetrik basierend auf der zweiten jeweiligen Aggregation von SHAP-Werten über den zweiten Teilsatz für Betriebsmerkmale des jeweiligen Betriebsclusters; und
für jedes jeweilige Betriebsmerkmal des zweiten Teilsatzes Skalieren der jeweiligen Schweremetrik mit einem Bruchteil der Gesamtanzahl an Trainingsdatenaufzeichnungen in dem zweiten Teilsatz mit den Merkmal-Wert-Paar-Kombinationen, die mit dem jeweiligen Betriebscluster assoziiert sind.

6. Verfahren nach Anspruch 2, ferner umfassend Identifizieren von jeweiligen Betriebsereignissen des zweiten Teilsatzes als Zeitfenster, während derer eine Leistungseigenschaft als problematisch beobachtet wird,
und wobei das Vergleichen der ersten und zweiten jeweiligen quantitativen Beiträge Folgendes umfasst:
für jedes jeweilige Betriebsereignis des zweiten Teilsatzes Berechnen einer jeweiligen Schweremetrik für jedes jeweilige Betriebsmerkmal basierend auf der zweiten jeweiligen Aggregation von SHAP-Werten über den zweiten Teilsatz während des jeweiligen Betriebsereignisses; und
für jedes jeweilige Betriebsmerkmal des zweiten Teilsatzes Skalieren der jeweiligen Schweremetrik mit der Gesamtanzahl an Zeitpunkten des jeweiligen Betriebsereignisses.

7. Verfahren nach Anspruch 1, ferner umfassend:
Identifizieren von problematischen Fallbasislinien gemäß den bestimmten jeweiligen Degradationsmetriken von spezifischen Betriebsmerkmalen des zweiten Teilsatzes wie gemessen durch ihre Assoziation mit einer oder mehreren beobachteten Leistungseigenschaften;
Erstellen von Vorlagen von Betriebsmerkmalen gemäß zumindest einem von: (i) einer Größe der gemessenen Assoziationen von Betriebsmerkmalen mit der einen oder den mehreren beobachteten Leistungseigenschaften, oder (ii) einer relativen Größe der gemessenen Assoziationen zwischen Betriebsmerkmalen mit der einen oder den mehreren beobachteten Leistungseigenschaften, oder (iii) der positiven oder negativen Beziehung der gemessenen Assoziationen von Betriebsmerkmalen mit der einen oder den mehreren beobachteten Leistungseigenschaften; und
Kategorisieren von problematischer Leistung durch Vergleichen der Vorlagen.

8. Verfahren nach Anspruch 2, ferner umfassend:
Berechnen eines Modellvorhersagefehlers in dem zweiten Teilsatz und Verwenden des Vorhersagefehlers, um eine zugeschriebene Wichtigkeit von jeweiligen Betriebsmerkmalen anzupassen; und
Qualifizieren einer Genauigkeit der Darstellung basierend auf berechnetem Modellvorhersagefehler.

9. System, umfassend:
einen oder mehrere Prozessoren; und
Speicher, der zum Speichern von Anweisungen konfiguriert ist, die, wenn durch den einen oder die mehreren Prozessoren ausgeführt, bewirken, dass das System Vorgänge durchführt, beinhaltend:
Erhalten (1202) eines Satzes von computerlesbaren Trainingsdatenaufzeichnungen, die jeweils Betrieb eines Kommunikationsnetzes kennzeichnen, wobei jede gegebene Trainingsdatenaufzeichnung eine Vielzahl von Betriebsmerkmalen des Kommunikationsnetzes und ein oder mehrere beobachtete Leistungseigenschaften des Kommunikationsnetzes beinhaltet, und wobei jedes Betriebsmerkmal mit einem oder mehreren Merkmal-Wert-Paaren assoziiert ist, die spezifisch für die gegebene Trainingsdatenaufzeichnung sind, und jede von der einen oder den mehreren beobachteten Leistungseigenschaften einer Beobachtung entspricht, die spezifisch für die gegebene Trainingsaufzeichnung ist;
Verwenden (1204) von zumindest einem Teil aus dem Satz von Trainingsdatenaufzeichnungen, um ein maschinelles Lern-, ML-Modell von Netzleistung zu trainieren, um erwartete Leistungseigenschaften vorherzusagen, wenn die Vielzahl von Betriebsmerkmalen in den Trainingsdatenaufzeichnungen als Eingabe und die eine oder mehreren beobachteten Leistungseigenschaften als Grundwahrheiten gegeben sind, wobei das ML-Modell zum Berechnen von Zuordnungen von gegebenen eingegebenen Merkmal-Wert-Paaren konfiguriert ist, um vorhergesagte Leistungseigenschaften auszugeben, und wobei für jede eingegebene Trainingsdatenaufzeichnung die Zuordnungen Beziehungen und/oder Interaktionen zwischen einer oder mehreren Kombinationen aus der Vielzahl von Betriebsmerkmalen und einer oder mehreren vorhergesagten Leistungseigenschaften darstellen;
für jede eingegebene Datenaufzeichnung eines ersten Teilsatzes aus dem Satz von Trainingsdatenaufzeichnungen Berechnen (1206) einer ersten fairen Verteilung von ersten jeweiligen quantitativen Beiträgen von jedem aus der Vielzahl von Betriebsmerkmalen zu der einen oder den mehreren vorhergesagten Leistungseigenschaften des trainierten ML-Modells, das auf den ersten Teilsatz angewendet wird, wobei für jede gegebene vorhergesagte Leistungseigenschaft eine Summe der ersten jeweiligen quantitativen Beiträge in der ersten fairen Verteilung einer Differenz zwischen der gegebenen vorhergesagten Leistungseigenschaft und einem Mittel von Vorhersagen durch das ML-Modell für alle Trainingsdatenaufzeichnungen aus dem Satz gleicht, und wobei der erste Teilsatz eine Kontrollprobe von Trainingsdatenaufzeichnungen umfasst, die beobachtete Leistungseigenschaften beinhalten, die eine Basislinie von normaler Leistung des Kommunikationsnetzes darstellen;
für jede eingegebene Datenaufzeichnung eines zweiten Teilsatzes aus dem Satz von Trainingsdatenaufzeichnungen Berechnen (1208) einer zweiten fairen Verteilung von zweiten jeweiligen quantitativen Beiträgen von jedem aus der Vielzahl von Betriebsmerkmalen zu der einen oder den mehreren vorhergesagten Leistungseigenschaften des trainierten ML-Modells, das auf den zweiten Teilsatz angewendet wird, wobei für jede gegebene vorhergesagte Leistungseigenschaft eine Summe der zweiten jeweiligen quantitativen Beiträge in der zweiten fairen Verteilung der Differenz zwischen der gegebenen vorhergesagten Leistungseigenschaft und dem Mittel von Vorhersagen durch das ML-Modell für alle Trainingsdatenaufzeichnungen aus dem Satz gleicht, und wobei der zweite Teilsatz nur diejenigen Trainingsdatenaufzeichnungen umfasst, die zumindest eine problematische beobachtete Leistungseigenschaft beinhalten, die zumindest einen Aspekt von abnormaler Leistung des Kommunikationsnetzes darstellt; und
Vergleichen (1210) der ersten und zweiten jeweiligen quantitativen Beiträge, um eine jeweilige Degradationsmetrik zum Assoziieren von jedem aus der Vielzahl von Betriebsmerkmalen des zweiten Teilsatzes mit der zumindest einen problematischen beobachteten Leistungseigenschaft des zweiten Teilsatzes zu bestimmen.

10. System nach Anspruch 9, wobei für jede eingegebene Datenaufzeichnung des ersten Teilsatzes aus dem Satz von Trainingsdatenaufzeichnungen das Berechnen der fairen Verteilung der ersten jeweiligen quantitativen Beiträge von jedem aus der Vielzahl von Betriebsmerkmalen zu der einen oder den mehreren vorhergesagten Leistungseigenschaften des trainierten ML-Modells Folgendes umfasst:
Berechnen von jeweiligen ersten Shapley-Additive-Explanations-, SHAP-Werten für jedes aus der Vielzahl von Betriebsmerkmalen in jeder eingegebenen Datenaufzeichnung des ersten Teilsatzes, wobei jeder gegebene SHAP-Wert einen quantitativen Beitrag eines gegebenen Betriebsmerkmals zu einer gegebenen vorhergesagten Leistungseigenschaft angibt,
wobei, für jede eingegebene Datenaufzeichnung des zweiten Teilsatzes aus dem Satz von Trainingsdatenaufzeichnungen, das Berechnen der zweiten fairen Verteilung von zweiten jeweiligen quantitativen Beiträgen von jedem aus der Vielzahl von Betriebsmerkmalen zu der einen oder den mehreren vorhergesagten Leistungseigenschaften des trainierten ML-Modells Folgendes umfasst:
Berechnen von jeweiligen zweiten SHAP-Werten für jedes aus der Vielzahl von Betriebsmerkmalen in jeder eingegebenen Datenaufzeichnung des zweiten Teilsatzes;
wobei das Vergleichen der ersten und zweiten jeweiligen quantitativen Beiträge, um die jeweilige Degradationsmetrik zum Assoziieren von jedem aus der Vielzahl von Betriebsmerkmalen des zweiten Teilsatzes mit der zumindest einen problematischen beobachteten Leistungseigenschaft zu bestimmen, Folgendes umfasst:
für jedes jeweilige Betriebsmerkmal des zweiten Teilsatzes Berechnen einer jeweiligen Schweremetrik basierend auf den zweiten jeweiligen SHAP-Werten über den zweiten Teilsatz für Betriebsmerkmale des jeweiligen Betriebsmerkmals; und
für jedes jeweilige Betriebsmerkmal des zweiten Teilsatzes Skalieren der jeweiligen Schweremetrik mit einem Bruchteil der Gesamtanzahl an Trainingsdatenaufzeichnungen in dem zweiten Teilsatz mit Merkmal-Wert-Paaren, die mit dem jeweiligen Betriebsmerkmal assoziiert sind.

11. System nach Anspruch 9, wobei für jede eingegebene Datenaufzeichnung des ersten Teilsatzes aus dem Satz von Trainingsdatenaufzeichnungen das Berechnen der ersten fairen Verteilung der ersten jeweiligen quantitativen Beiträge von jedem aus der Vielzahl von Betriebsmerkmalen zu der einen oder den mehreren vorhergesagten Leistungseigenschaften des trainierten ML-Modells Folgendes umfasst:
Berechnen von jeweiligen ersten Shapley-Additive-Explanations-, SHAP-Werten für jedes aus der Vielzahl von Betriebsmerkmalen in jeder eingegebenen Datenaufzeichnung des ersten Teilsatzes, wobei jeder gegebene SHAP-Wert einen quantitativen Beitrag eines gegebenen Betriebsmerkmals zu einer gegebenen vorhergesagten Leistungseigenschaft angibt,
wobei, für jede eingegebene Datenaufzeichnung des zweiten Teilsatzes aus dem Satz von Trainingsdatenaufzeichnungen, das Berechnen der zweiten fairen Verteilung von zweiten jeweiligen quantitativen Beiträgen von jedem aus der Vielzahl von Betriebsmerkmalen zu der einen oder den mehreren vorhergesagten Leistungseigenschaften des trainierten ML-Modells Folgendes umfasst:
Berechnen von jeweiligen zweiten SHAP-Werten für jedes aus der Vielzahl von Betriebsmerkmalen in jeder eingegebenen Datenaufzeichnung des zweiten Teilsatzes;
wobei das Vergleichen der ersten und zweiten jeweiligen quantitativen Beiträge, um die jeweilige Degradationsmetrik zum Assoziieren von jedem aus der Vielzahl von Betriebsmerkmalen des zweiten Teilsatzes mit der zumindest einen problematischen beobachteten Leistungseigenschaft zu bestimmen, Folgendes umfasst:
für jedes jeweilige Betriebsmerkmal des ersten Teilsatzes Berechnen einer jeweiligen ersten statistischen Verteilung von jeweiligen ersten SHAP-Werten über den ersten Teilsatz;
für jedes jeweilige Betriebsmerkmal des zweiten Teilsatzes Berechnen einer jeweiligen zweiten statistischen Verteilung von jeweiligen zweiten SHAP-Werten über den zweiten Teilsatz; und
für jedes jeweilige gemeinsame Betriebsmerkmal sowohl des ersten als auch des zweiten Teilsatzes Vergleichen der jeweiligen zweiten statistischen Verteilung mit der jeweiligen ersten statistischen Verteilung.

12. System nach Anspruch 9, wobei das Vergleichen des ersten und zweiten jeweiligen quantitativen Beitrags, um die jeweilige Degradationsmetrik zum Assoziieren von jedem aus der Vielzahl von Betriebsmerkmalen des zweiten Teilsatzes mit der zumindest einen problematischen beobachteten Leistungseigenschaft zu bestimmen, Folgendes umfasst:
Erzeugen einer Visualisierung eines Vergleichs der zweiten jeweiligen quantitativen Beiträge mit einer Basislinie, die den ersten jeweiligen quantitativen Beiträgen entspricht,
wobei die Visualisierung zumindest eines von einer digitalen Anzeige, die auf einer Anzeigevorrichtung dargestellt ist, oder einer gedruckten Grafik produziert durch eine Druckvorrichtung ist.

13. System nach Anspruch 9, wobei das Kommunikationsnetz zumindest eines von einem Telekommunikationsnetz oder einem Datenkommunikationsnetz ist,
wobei jede Trainingsdatenaufzeichnung eine Kommunikationsverlaufsaufzeichnung umfasst, wobei die Kommunikationsverlaufsaufzeichnung zumindest eines von einer Anrufdetailaufzeichnung oder einer Sitzungsdetailaufzeichnung ist,
wobei die Vielzahl von Betriebsfunktionen eine Merkmalsliste umfasst, die aus zumindest einem von Folgendem besteht: Basisstationsidentifikation, ID, Zell-ID, Sektor-ID, Funkfrequenz, öffentliches terrestrisches Mobilfunknetz, PLMN, ID, Signal-Rausch-Verhältnis, Anrufqualität, geografischen Koordinaten, Funkzugangstechnologie, Benutzerendgerätevorrichtungstyp oder Benutzerendgerätevorrichtungshersteller,
und wobei die beobachteten Leistungseigenschaften ein oder mehrere beobachtete Instanzen von definierten Leistungseigenschaften in einer Leistungsliste umfassen, die aus zumindest einem von Folgendem besteht: Anrufabschlussstatus, Anrufabbruchstatus, Anrufblockierungsstatus, Datendurchsatzrate oder Anrufqualität.

14. System nach Anspruch 9, wobei das Kommunikationsnetz zumindest eines von einem Telekommunikationsnetz oder einem Datenkommunikationsnetz ist,
wobei jede Trainingsdatenaufzeichnung eine Kommunikationsverlaufsaufzeichnung oder Systemtelemetrie von einer oder mehreren Netzschichten des Kommunikationsnetzes umfasst, wobei die eine oder mehreren Netzschichten zumindest eines von Folgendem sind: ein Core der fünften Generation, 5G, ein Funkzugangsnetz, RAN, eine Benutzerebene, ein Steuerplan, eine Virtualisierungsschicht oder eine physische Infrastrukturschicht des Kommunikationsnetzes,
und wobei die Vorgänge ferner Folgendes beinhalten:
Überwachen von einer oder mehreren Leistungseigenschaften, die während Laufzeitbetrieben des Kommunikationsnetzes beobachtet werden; und
Lokalisieren eines Fehlers auf die Betriebsmerkmale von einer oder mehreren Netzschichten.

15. Herstellungsartikel, der ein nichtflüchtiges computerlesbares Medium beinhaltet, auf dem Programmanweisungen gespeichert sind, die, wenn durch einen oder mehrere Prozessoren eines Systems ausgeführt, bewirken, dass das System Vorgänge durchführt, beinhaltend:
Erhalten (1202) eines Satzes von computerlesbaren Trainingsdatenaufzeichnungen, die jeweils Betrieb eines Kommunikationsnetzes kennzeichnen, wobei jede gegebene Trainingsdatenaufzeichnung eine Vielzahl von Betriebsmerkmalen des Kommunikationsnetzes und ein oder mehrere beobachtete Leistungseigenschaften des Kommunikationsnetzes beinhaltet, und wobei jedes Betriebsmerkmal mit einem oder mehreren Merkmal-Wert-Paaren assoziiert ist, die spezifisch für die gegebene Trainingsdatenaufzeichnung sind, und jede von der einen oder den mehreren beobachteten Leistungseigenschaften einer Beobachtung entspricht, die spezifisch für die gegebene Trainingsaufzeichnung ist;
Verwenden (1204) von zumindest einem Teil aus dem Satz von Trainingsdatenaufzeichnungen, um ein maschinelles Lern-, ML-Modell von Netzleistung zu trainieren, um erwartete Leistungseigenschaften vorherzusagen, wenn die Vielzahl von Betriebsmerkmalen in den Trainingsdatenaufzeichnungen als Eingabe und die eine oder mehreren beobachteten Leistungseigenschaften als Grundwahrheiten gegeben sind, wobei das ML-Modell konfiguriert ist, um Zuordnungen von gegebenen eingegebenen Merkmal-Wert-Paaren zu berechnen, um vorhergesagte Leistungseigenschaften auszugeben, und wobei für jede eingegebene Trainingsdatenaufzeichnung die Zuordnungen Beziehungen und/oder Interaktionen zwischen einer oder mehreren Kombinationen aus der Vielzahl von Betriebsmerkmalen und einer oder mehreren vorhergesagten Leistungseigenschaften darstellen;
für jede eingegebene Datenaufzeichnung eines ersten Teilsatzes aus dem Satz von Trainingsdatenaufzeichnungen Berechnen (1206) einer ersten fairen Verteilung von ersten jeweiligen quantitativen Beiträgen von jedem aus der Vielzahl von Betriebsmerkmalen zu der einen oder den mehreren vorhergesagten Leistungseigenschaften des trainierten ML-Modells, das auf den ersten Teilsatz angewendet wird, wobei für jede gegebene vorhergesagte Leistungseigenschaft eine Summe der ersten jeweiligen quantitativen Beiträge in der ersten fairen Verteilung einer Differenz zwischen der gegebenen vorhergesagten Leistungseigenschaft und einem Mittel von Vorhersagen durch das ML-Modell für alle Trainingsdatenaufzeichnungen aus dem Satz gleicht, und wobei der erste Teilsatz eine Kontrollprobe von Trainingsdatenaufzeichnungen ist, die beobachtete Leistungseigenschaften beinhalten, die eine Basislinie von normaler Leistung des Kommunikationsnetzes darstellen;
für jede eingegebene Trainingsdatenaufzeichnung eines zweiten Teilsatzes aus dem Satz von Trainingsdatenaufzeichnungen Berechnen (1208) einer zweiten fairen Verteilung von zweiten jeweiligen quantitativen Beiträgen von jedem aus der Vielzahl von Betriebsmerkmalen zu der einen oder den mehreren vorhergesagten Leistungseigenschaften des trainierten ML-Modells, das auf den zweiten Teilsatz angewendet wird, wobei für jede gegebene vorhergesagte Leistungseigenschaft eine Summe der zweiten jeweiligen quantitativen Beiträge in der zweiten fairen Verteilung der Differenz zwischen der gegebenen vorhergesagten Leistungseigenschaft und dem Mittel von Vorhersagen durch das ML-Modell für alle Trainingsdatenaufzeichnungen aus dem Satz gleicht, und wobei der zweite Teilsatz nur diejenigen Trainingsdatenaufzeichnungen umfasst, die zumindest eine problematische beobachtete Leistungseigenschaft beinhalten, die zumindest einen Aspekt von abnormaler Leistung des Kommunikationsnetzes darstellt; und
Vergleichen (1210) der ersten und zweiten jeweiligen quantitativen Beiträge, um eine jeweilige Degradationsmetrik zum Assoziieren von jedem aus der Vielzahl von Betriebsmerkmalen des zweiten Teilsatzes mit der zumindest einen problematischen beobachteten Leistungseigenschaft des zweiten Teilsatzes zu bestimmen.

## Revendications

1. Procédé mis en oeuvre par ordinateur (1200) comprenant :
l'obtention (1202) d'un ensemble d'enregistrements de données d'entraînement lisibles par ordinateur qui caractérisent chacun le fonctionnement d'un réseau de communication, dans lequel chaque enregistrement de données d'entraînement donné comprend une pluralité de caractéristiques opérationnelles du réseau de communication et une ou plusieurs caractéristiques de performance observées du réseau de communication, et dans lequel chaque caractéristique opérationnelle est associée à une ou plusieurs paires caractéristique-valeur spécifiques à l'enregistrement d'entraînement donné, et chacune de l'une ou plusieurs caractéristiques de performance observées correspond à une observation spécifique à l'enregistrement d'entraînement donné ;
l'utilisation (1204) d'au moins une partie de l'ensemble d'enregistrements de données d'entraînement pour entraîner un modèle d'apprentissage automatique, ML, de performances réseau pour prédire des caractéristiques de performances attendues étant donné la pluralité de caractéristiques opérationnelles dans les enregistrements de données d'entraînement en tant qu'entrée et l'une ou plusieurs caractéristiques de performances observées en tant que vérités fondamentales, dans lequel le modèle ML est configuré pour calculer des mappages de paires caractéristique-valeur d'entrée données pour produire des caractéristiques de performances prédites, et dans lequel, pour chaque enregistrement de données d'entraînement d'entrée, les mappages représentent des relations et/ou des interactions entre une ou plusieurs combinaisons parmi la pluralité de caractéristiques opérationnelles et une ou plusieurs caractéristiques de performances prédites ;
pour chaque enregistrement de données d'entrée d'un premier sous-ensemble de l'ensemble d'enregistrements de données d'entraînement, le calcul (1206) d'une première distribution équitable de premières contributions quantitatives respectives de chacune de la pluralité de caractéristiques opérationnelles à l'une ou plusieurs caractéristiques de performance prédites du modèle ML entraîné appliqué au premier sous-ensemble, dans lequel, pour chaque caractéristique de performance prédite donnée, une somme des premières contributions quantitatives respectives dans la première distribution équitable est égale à une différence entre la caractéristique de performance prédite donnée et une moyenne de prédictions par le modèle ML pour tous les enregistrements de données d'entraînement de l'ensemble, et dans lequel le premier sous-ensemble comprend un échantillon de contrôle d' enregistrements de données d'entraînement qui comprennent des caractéristiques de performance observées représentant une base de référence de performance normale du réseau de communication ;
pour chaque enregistrement de données d'entrée d'un second sous-ensemble de l'ensemble d'enregistrements de données d'entraînement, le calcul (1208) d'une seconde distribution équitable de secondes contributions quantitatives respectives de chacune de la pluralité de caractéristiques opérationnelles à l'une ou plusieurs caractéristiques de performance prédites du modèle ML entraîné appliqué au second sous-ensemble, dans lequel, pour chaque caractéristique de performance prédite donnée, une somme des secondes contributions quantitatives respectives dans la seconde distribution équitable est égale à la différence entre la caractéristique de performance prédite donnée et la moyenne des prédictions par le modèle ML pour tous les enregistrements de données d'entraînement de l'ensemble, et dans lequel le second sous-ensemble comprend uniquement les enregistrements de données d'entraînement qui comprennent au moins une caractéristique de performance observée problématique représentant au moins un aspect de performance anormale du réseau de communication ; et
la comparaison (1210) des première et seconde contributions quantitatives respectives pour déterminer une métrique de dégradation respective permettant d'associer chacune de la pluralité de caractéristiques opérationnelles du second sous-ensemble à l'au moins une caractéristique de performance observée problématique du second sous-ensemble.

2. Procédé mis en oeuvre par ordinateur selon la revendication 1, dans lequel, pour chaque enregistrement de données d'entrée du premier sous-ensemble de l'ensemble d'enregistrements de données d'entraînement, le calcul de la distribution équitable des premières contributions quantitatives respectives de chacune de la pluralité de caractéristiques opérationnelles à l'une ou plusieurs caractéristiques de performance prédites du modèle ML entraîné comprend :
le calcul de premières valeurs respectives d'explications additives de Shapley, SHAP, pour chacune de la pluralité de caractéristiques opérationnelles dans chaque enregistrement de données d'entrée du premier sous-ensemble, dans lequel chaque valeur SHAP donnée indique une contribution quantitative d'une caractéristique opérationnelle donnée à une caractéristique de performance prédite donnée,
dans lequel, pour chaque enregistrement de données d'entrée du second sous-ensemble de l'ensemble d'enregistrements de données d'entraînement, le calcul de la seconde distribution équitable des secondes contributions quantitatives respectives de chacune de la pluralité de caractéristiques opérationnelles à l'une ou plusieurs caractéristiques de performance prédites du modèle ML entraîné comprend :
le calcul de secondes valeurs SHAP respectives pour chacune de la pluralité de caractéristiques opérationnelles dans chaque enregistrement de données d'entrée du second sous-ensemble.

3. Procédé mis en oeuvre par ordinateur selon la revendication 2, dans lequel la comparaison des première et seconde contributions quantitatives respectives pour déterminer la métrique de dégradation respective permettant d'associer chacune de la pluralité de caractéristiques opérationnelles du second sous-ensemble à l'au moins une caractéristique de performance problématique observée comprend :
pour chaque caractéristique opérationnelle respective du second sous-ensemble, le calcul d'une métrique de gravité respective sur la base de la seconde agrégation respective de valeurs SHAP à travers le second sous-ensemble de la caractéristique opérationnelle respective ; et
pour chaque caractéristique opérationnelle respective du second sous-ensemble, la mise à l'échelle de la métrique de gravité respective par une fraction du nombre total d'enregistrements de données dans le second sous-ensemble ayant des paires caractéristique-valeur associées à la caractéristique opérationnelle respective.

4. Procédé mis en oeuvre par ordinateur selon la revendication 2, dans lequel la comparaison des première et seconde contributions quantitatives respectives pour déterminer la métrique de dégradation respective permettant d'associer chacune de la pluralité de caractéristiques opérationnelles du second sous-ensemble à l'au moins une caractéristique de performance problématique observée comprend :
pour chaque caractéristique opérationnelle respective du premier sous-ensemble, le calcul d'une première distribution statistique respective des premières valeurs SHAP respectives à travers le premier sous-ensemble ;
pour chaque caractéristique opérationnelle respective du second sous-ensemble, le calcul d'une seconde distribution statistique respective des secondes valeurs SHAP respectives à travers le second sous-ensemble ; et
pour chaque caractéristique opérationnelle respective commune aux premier et second sous-ensembles, la comparaison de la seconde distribution statistique respective à la première distribution statistique respective.

5. Procédé selon la revendication 2, comprenant en outre :
la détermination de groupes respectifs de caractéristiques opérationnelles dans les enregistrements du second sous-ensemble ;
la détermination d'une fréquence respective parmi les enregistrements de chaque groupe respectif ;
l'identification de groupes opérationnels respectifs comme tous les groupes respectifs comportant des fréquences respectives supérieures à un seuil ;
pour chaque groupe opérationnel respectif du second sous-ensemble, le calcul d'une métrique de gravité respective sur la base de la seconde agrégation respective de valeurs SHAP à travers le second sous-ensemble pour les caractéristiques opérationnelles du groupe opérationnel respectif ; et
pour chaque caractéristique opérationnelle respective du second sous-ensemble, la mise à l'échelle de la métrique de gravité respective par une fraction du nombre total d'enregistrements de données d'entraînement dans le second sous-ensemble ayant les combinaisons de paires caractéristique-valeur associées au groupe opérationnel respectif.

6. Procédé selon la revendication 2, comprenant en outre l'identification d'événements opérationnels respectifs du second sous-ensemble en tant que fenêtres temporelles pendant lesquelles une caractéristique de performance est observée comme étant problématique,
et dans lequel la comparaison des première et seconde contributions quantitatives respectives comprend :
pour chaque événement opérationnel respectif du second sous-ensemble, le calcul d'une métrique de gravité respective pour chaque caractéristique opérationnelle respective sur la base de la seconde agrégation respective de valeurs SHAP à travers le second sous-ensemble pendant l'événement opérationnel respectif ; et
pour chaque caractéristique opérationnelle respective du second sous-ensemble, la mise à l'échelle de la métrique de gravité respective par le nombre total de points temporels de l'événement opérationnel respectif.

7. Procédé selon la revendication 1, comprenant en outre :
l'identification de bases de référence de cas problématiques en fonction des métriques de dégradation respectives déterminées de caractéristiques opérationnelles spécifiques du second sous-ensemble telles que mesurées par leur association à l'une ou plusieurs caractéristiques de performance observées ;
la création de modèles de caractéristiques opérationnelles en fonction d'au moins l'un des éléments suivants : (i) une grandeur des associations mesurées de caractéristiques opérationnelles à l'une ou plusieurs caractéristiques de performance observées, ou (ii) une grandeur relative des associations mesurées entre des caractéristiques opérationnelles à l'une ou plusieurs caractéristiques de performance observées, ou (iii) la relation positive ou négative des associations mesurées de caractéristiques opérationnelles à l'une ou plusieurs caractéristiques de performance observées ; et
la catégorisation des performances problématiques en comparant les modèles.

8. Procédé selon la revendication 2, comprenant en outre :
le calcul d'une erreur de prédiction de modèle dans le second sous-ensemble et l'utilisation de l'erreur de prédiction pour ajuster une importance attribuée des caractéristiques opérationnelles respectives ; et
la qualification d'une précision de représentation sur la base d'une erreur de prédiction du modèle calculé.

9. Système comprenant :
un ou plusieurs processeurs ; et
une mémoire configurée pour stocker des instructions qui, lorsqu'elles sont exécutées par l'un ou plusieurs processeurs, amènent le système à effectuer des opérations comprenant :
l'obtention (1202) d'un ensemble d'enregistrements de données d'entraînement lisibles par ordinateur qui caractérisent chacun le fonctionnement d'un réseau de communication, dans lequel chaque enregistrement de données d'entraînement donné comprend une pluralité de caractéristiques opérationnelles du réseau de communication et une ou plusieurs caractéristiques de performance observées du réseau de communication, et dans lequel chaque caractéristique opérationnelle est associée à une ou plusieurs paires caractéristique-valeur spécifiques à l'enregistrement d'entraînement donné, et chacune de l'une ou plusieurs caractéristiques de performance observées correspond à une observation spécifique à l'enregistrement d'entraînement donné ;
l'utilisation (1204) d'au moins une partie de l'ensemble d'enregistrements de données d'entraînement pour entraîner un modèle d'apprentissage automatique, ML, de performances réseau pour prédire des caractéristiques de performances attendues étant donné la pluralité de caractéristiques opérationnelles dans les enregistrements de données d'entraînement en tant qu'entrée et l'une ou plusieurs caractéristiques de performances observées en tant que vérités fondamentales, dans lequel le modèle ML est configuré pour calculer des mappages de paires caractéristique-valeur d'entrée données pour produire des caractéristiques de performances prédites, et dans lequel, pour chaque enregistrement de données d'entraînement d'entrée, les mappages représentent des relations et/ou des interactions entre une ou plusieurs combinaisons parmi la pluralité de caractéristiques opérationnelles et une ou plusieurs caractéristiques de performances prédites ;
pour chaque enregistrement de données d'entrée d'un premier sous-ensemble de l'ensemble d'enregistrements de données d'entraînement, le calcul (1206) d'une première distribution équitable des premières contributions quantitatives respectives de chacune de la pluralité de caractéristiques opérationnelles à l'une ou plusieurs caractéristiques de performance prédites du modèle ML entraîné appliqué au premier sous-ensemble, dans lequel, pour chaque caractéristique de performance prédite donnée, une somme des premières contributions quantitatives respectives dans la première distribution équitable est égale à une différence entre la caractéristique de performance prédite donnée et une moyenne de prédictions par le modèle ML pour tous les enregistrements de données d'entraînement de l'ensemble, et dans lequel le premier sous-ensemble comprend un échantillon de contrôle d'enregistrements de données d'entraînement qui comprennent des caractéristiques de performance observées représentant une base de référence de performance normale du réseau de communication ;
pour chaque enregistrement de données d'entrée d'un second sous-ensemble de l'ensemble d'enregistrements de données d'entraînement, le calcul (1208) d'une seconde distribution équitable de secondes contributions quantitatives respectives de chacune de la pluralité de caractéristiques opérationnelles à l'une ou plusieurs caractéristiques de performance prédites du modèle ML entraîné appliqué au second sous-ensemble, dans lequel, pour chaque caractéristique de performance prédite donnée, une somme des secondes contributions quantitatives respectives dans la seconde distribution équitable est égale à la différence entre la caractéristique de performance prédite donnée et la moyenne des prédictions par le modèle ML pour tous les enregistrements de données d'entraînement de l'ensemble, et dans lequel le second sous-ensemble comprend uniquement les enregistrements de données d'entraînement qui comprennent au moins une caractéristique de performance problématique observée représentant au moins un aspect de performance anormale du réseau de communication ; et
la comparaison (1210) des première et seconde contributions quantitatives respectives pour déterminer une métrique de dégradation respective permettant d'associer chacune de la pluralité de caractéristiques opérationnelles du second sous-ensemble à l'au moins une caractéristique de performance observée problématique du second sous-ensemble.

10. Système selon la revendication 9, dans lequel, pour chaque enregistrement de données d'entrée du premier sous-ensemble de l'ensemble d'enregistrements de données d'entraînement, le calcul de la distribution équitable des premières contributions quantitatives respectives de chacune de la pluralité de caractéristiques opérationnelles à l'une ou plusieurs caractéristiques de performance prédites du modèle ML entraîné comprend :
le calcul de premières valeurs respectives d'explications additives de Shapley, SHAP, pour chacune de la pluralité de caractéristiques opérationnelles dans chaque enregistrement de données d'entrée du premier sous-ensemble, dans lequel chaque valeur SHAP donnée indique une contribution quantitative d'une caractéristique opérationnelle donnée à une caractéristique de performance prédite donnée,
dans lequel, pour chaque enregistrement de données d'entrée du second sous-ensemble de l'ensemble d'enregistrements de données d'entraînement, le calcul de la seconde distribution équitable des secondes contributions quantitatives respectives de chacune de la pluralité de caractéristiques opérationnelles à l'une ou plusieurs caractéristiques de performance prédites du modèle ML entraîné comprend :
le calcul des secondes valeurs SHAP respectives pour chacune de la pluralité de caractéristiques opérationnelles dans chaque enregistrement de données d'entrée du second sous-ensemble ;
dans lequel la comparaison des première et seconde contributions quantitatives respectives pour déterminer la métrique de dégradation respective pour associer chacune de la pluralité de caractéristiques opérationnelles du second sous-ensemble à l'au moins une caractéristique de performance problématique observée comprend :
pour chaque caractéristique opérationnelle respective du second sous-ensemble, le calcul d'une métrique de gravité respective sur la base des secondes valeurs SHAP respectives à travers le second sous-ensemble pour les caractéristiques opérationnelles de la caractéristique opérationnelle respective ; et
pour chaque caractéristique opérationnelle respective du second sous-ensemble, la mise à l'échelle de la métrique de gravité respective par une fraction du nombre total d'enregistrements de données d'entraînement dans le second sous-ensemble ayant des paires caractéristique/valeur associées à la caractéristique opérationnelle respective.

11. Système selon la revendication 9, dans lequel, pour chaque enregistrement de données d'entrée du premier sous-ensemble de l'ensemble d'enregistrements de données d'entraînement, le calcul de la première distribution équitable des premières contributions quantitatives respectives de chacune de la pluralité de caractéristiques opérationnelles à l'une ou plusieurs caractéristiques de performance prédites du modèle ML entraîné comprend :
le calcul de premières valeurs respectives d'explications additives de Shapley, SHAP, pour chacune de la pluralité de caractéristiques opérationnelles dans chaque enregistrement de données d'entrée du premier sous-ensemble, dans lequel chaque valeur SHAP donnée indique une contribution quantitative d'une caractéristique opérationnelle donnée à une caractéristique de performance prédite donnée,
dans lequel, pour chaque enregistrement de données d'entrée du second sous-ensemble de l'ensemble d'enregistrements de données d'entraînement, le calcul de la seconde distribution équitable des secondes contributions quantitatives respectives de chacune de la pluralité de caractéristiques opérationnelles à l'une ou plusieurs caractéristiques de performance prédites du modèle ML entraîné comprend :
le calcul des secondes valeurs SHAP respectives pour chacune de la pluralité de caractéristiques opérationnelles dans chaque enregistrement de données d'entrée du second sous-ensemble ;
dans lequel la comparaison des première et seconde contributions quantitatives respectives pour déterminer la métrique de dégradation respective pour associer chacune de la pluralité de caractéristiques opérationnelles du second sous-ensemble à l'au moins une caractéristique de performance problématique observée comprend :
pour chaque caractéristique opérationnelle respective du premier sous-ensemble, le calcul d'une première distribution statistique respective des premières valeurs SHAP respectives à travers le premier sous-ensemble ;
pour chaque caractéristique opérationnelle respective du second sous-ensemble, le calcul d'une seconde distribution statistique respective des secondes valeurs SHAP respectives à travers le second sous-ensemble ; et
pour chaque caractéristique opérationnelle respective commune aux premier et second sous-ensembles, la comparaison de la seconde distribution statistique respective à la première distribution statistique respective.

12. Système selon la revendication 9, dans lequel la comparaison des première et seconde contributions quantitatives respectives pour déterminer la métrique de dégradation respective permettant d'associer chacune de la pluralité de caractéristiques opérationnelles du second sous-ensemble à l'au moins une caractéristique de performance problématique observée comprend :
la génération d'une visualisation d'une comparaison des secondes contributions quantitatives respectives à une base de référence correspondant aux premières contributions quantitatives respectives,
dans lequel la visualisation est au moins l'un d'un affichage numérique présenté sur un dispositif d'affichage, ou d'un graphique imprimé produit par un dispositif d'impression.

13. Système selon la revendication 9, dans lequel le réseau de communication est au moins l'un d'un réseau de télécommunications ou d'un réseau de communication de données,
dans lequel chaque enregistrement de données d'entraînement comprend un enregistrement d'historique de communication, l'enregistrement d'historique de communication étant au moins l'un d'un enregistrement de détails d'appel ou d'un enregistrement de détails de session,
dans lequel la pluralité de caractéristiques opérationnelles comprend une liste de caractéristiques constituée d'au moins l'un des éléments suivants : identification, ID, de station de base, ID de cellule, ID de secteur, fréquence radio, ID de réseau mobile terrestre public, PLMN, rapport signal/bruit, qualité d'appel, coordonnées géographiques, technologie d'accès radio, type de dispositif de terminal utilisateur ou fabricant de dispositif de terminal utilisateur,
et dans lequel les caractéristiques de performance observées comprennent une ou plusieurs instances observées de caractéristiques de performance définies dans une liste de performances constituée d'au moins l'un des éléments suivants : état d'achèvement d'appel, état d'appel abandonné, état d'appel bloqué, débit de données ou qualité d'appel.

14. Système selon la revendication 9, dans lequel le réseau de communication est au moins l'un d'un réseau de télécommunications ou d'un réseau de communication de données,
dans lequel chaque enregistrement de données d'entraînement comprend un enregistrement d'historique de communication ou une télémétrie système provenant d'une ou plusieurs couches réseau du réseau de communication, l'une ou plusieurs couches réseau étant au moins l'une des suivantes : un coeur de cinquième génération, 5G, un réseau d'accès radio, RAN, un plan utilisateur, un plan de contrôle, une couche de virtualisation ou une couche d'infrastructure physique du réseau de communication,
et dans lequel les opérations comprennent en outre :
la surveillance d'une ou plusieurs caractéristiques de performance observées pendant les opérations d'exécution du réseau de communication ; et
la localisation d'un défaut sur les caractéristiques opérationnelles d'une ou plusieurs couches du réseau.

15. Article manufacturé comprenant un support non transitoire lisible par ordinateur, sur lequel sont stockées des instructions de programme qui, lorsqu'elles sont exécutées par un ou plusieurs processeurs d'un système, amènent le système à effectuer des opérations comprenant :
l'obtention (1202) d'un ensemble d'enregistrements de données d'entraînement lisibles par ordinateur qui caractérisent chacun le fonctionnement d'un réseau de communication, dans lequel chaque enregistrement de données d'entraînement donné comprend une pluralité de caractéristiques opérationnelles du réseau de communication et une ou plusieurs caractéristiques de performance observées du réseau de communication, et dans lequel chaque caractéristique opérationnelle est associée à une ou plusieurs paires caractéristique-valeur spécifiques à l'enregistrement d'entraînement donné, et chacune de l'une ou plusieurs caractéristiques de performance observées correspond à une observation spécifique à l'enregistrement d'entraînement donné ;
l'utilisation (1204) d'au moins une partie de l'ensemble d'enregistrements de données d'entraînement pour entraîner un modèle d'apprentissage automatique, ML, de performances réseau pour prédire des caractéristiques de performances attendues étant donné la pluralité de caractéristiques opérationnelles dans les enregistrements de données d'entraînement en tant qu'entrée et l'une ou plusieurs caractéristiques de performances observées en tant que vérités fondamentales, dans lequel le modèle ML est configuré pour le calcul de mappages de paires caractéristique-valeur d'entrée données pour produire des caractéristiques de performances prédites, et dans lequel, pour chaque enregistrement de données d'entraînement d'entrée, les mappages représentent des relations et/ou des interactions entre une ou plusieurs combinaisons parmi la pluralité de caractéristiques opérationnelles et une ou plusieurs caractéristiques de performances prédites ;
pour chaque enregistrement de données d'entrée d'un premier sous-ensemble de l'ensemble d'enregistrements de données d'entraînement, le calcul (1206) d'une première distribution équitable de premières contributions quantitatives respectives de chacune de la pluralité de caractéristiques opérationnelles à l'une ou plusieurs caractéristiques de performance prédites du modèle ML entraîné appliqué au premier sous-ensemble, dans lequel, pour chaque caractéristique de performance prédite donnée, une somme des premières contributions quantitatives respectives dans la première distribution équitable est égale à une différence entre la caractéristique de performance prédite donnée et une moyenne de prédictions par le modèle ML pour tous les enregistrements de données d'entraînement de l'ensemble, et dans lequel le premier sous-ensemble est un échantillon de contrôle d'enregistrements de données d'entraînement qui comprennent des caractéristiques de performance observées représentant une base de référence de performance normale du réseau de communication ;
pour chaque enregistrement de données d'entrée d'un second sous-ensemble de l'ensemble d'enregistrements de données d'entraînement, le calcul (1208) d'une seconde distribution équitable de secondes contributions quantitatives respectives de chacune de la pluralité de caractéristiques opérationnelles à l'une ou plusieurs caractéristiques de performance prédites du modèle ML entraîné appliqué au second sous-ensemble, dans lequel, pour chaque caractéristique de performance prédite donnée, une somme des secondes contributions quantitatives respectives dans la seconde distribution équitable est égale à la différence entre la caractéristique de performance prédite donnée et la moyenne des prédictions par le modèle ML pour tous les enregistrements de données d'entraînement de l'ensemble, et dans lequel le second sous-ensemble comprend uniquement les enregistrements de données d'entraînement qui comprennent au moins une caractéristique de performance observée problématique représentant au moins un aspect de performance anormale du réseau de communication ; et
la comparaison (1210) des première et seconde contributions quantitatives respectives pour déterminer une métrique de dégradation respective permettant d'associer chacune de la pluralité de caractéristiques opérationnelles du second sous-ensemble à l'au moins une caractéristique de performance observée problématique du second sous-ensemble.
